# EUROPEAN PATENT APPLICATION

(11) **EP 4 280 748 A1**
(43) Date of publication of application: **22.11.2023**
(21) Application number: 21919445.3
(22) Date of filing: 18.01.2021
(51) Int. Cl.: H04W 72/04, H04W 28/04

(54) **TERMINAL, COMMUNICATION METHOD, AND BASE STATION**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/001543
(87) International publication number: WO 2022/153552

(57) **Abstract**

A terminal includes a receiving unit that receives a single item of downlink control information including scheduling information for multiple downlink shared channels and an offset value between a resource position of one downlink shared channel of the multiple downlink shared channels and a resource position of an uplink control channel, and that receives the multiple downlink shared channels in accordance with the scheduling information; a control unit that determines a resource position of the uplink control channel for transmitting feedback information for the reception of the multiple downlink shared channels based on the resource position of the one downlink shared channel and the offset value; and a transmitting unit that transmits the feedback information for the reception of the multiple downlink shared channels at the determined resource position of the uplink control channel.

## Description

### [Technical Field]

The present invention relates to a terminal and a base station in a radio communication system.

### [Background Art]

In the 3rd Generation Partnership Project (3GPP), a study on a radio communication system referred to as 5G or New Radio (NR) (in the following, the radio communication system is referred to as "NR") has been advanced, in order to achieve a further increase in system capacity, a further increase in a data transmission rate, a further reduction of latency in a radio section, and the like. In 5G, in order to meet the requirements that, while achieving a throughput of greater than or equal to 10 Gbps, latency in the radio section is reduced to be less than or equal to 1 ms, various radio technologies and various types of network architecture have been studied.

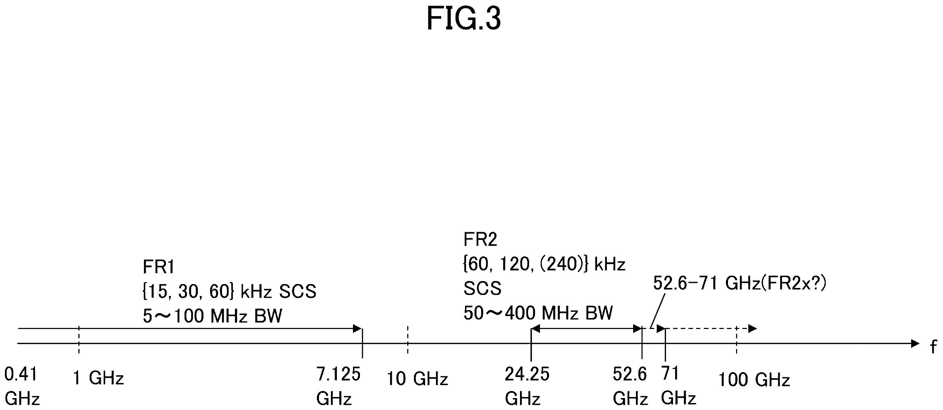

The 3GPP release 15 and release 16 New Radio (NR) specifications assume that a frequency band up to 52.6 GHz will be used for radio communications. As illustrated in Fig. 3, as a frequency band used for radio communication, a frequency range from 410 MHz to 7.125 GHz (Frequency Range 1 (FR1)) and a frequency range from 24.25 GHz to 52.6 GHz (Frequency Range (FR2)) are specified. Currently, in the 3GPP, the use of frequency bands from 52.6 GHz to 71 GHz has been studied for radio communication as a frequency band other than FR1 and FR2 (NPL 1 and NPL 2).

### [Citation List]

### [Non Patent Literature]

[NPL 1] TSG RAN Meeting #82, RP-182861, Sorrento, Italy, December 10-13, 2018
[NPL 2] 3GPP TR 38.807 V16.0.0 (2019-12)
[NPL 3] 3GPP TR 38.808 V1.0.0 (2020-12)

### [Summary of Invention]

### [Technical Problem]

It has been studied to reduce PDCCH monitoring capability of a terminal by using a large size monitoring unit (a unit of monitoring) of several slots. If a large PDCCH monitoring unit is supported, by scheduling multiple PDSCHs or multiple PUSCHs by using a single PDCCH, flexibility of data scheduling can be ensured.

There is a need for an extended HARQ technique in a case where multiple PDSCHs are scheduled by a single DCI.

### [Solution to Problem]

According to the disclosed technology, there is provided a terminal including a receiving unit that receives a single item of downlink control information including scheduling information for multiple downlink shared channels and an offset value between a resource position of one downlink shared channel of the multiple downlink shared channels and a resource position of an uplink control channel, and that receives the multiple downlink shared channels in accordance with the scheduling information; a control unit that determines a resource position of the uplink control channel for transmitting feedback information for the reception of the multiple downlink shared channels based on the resource position of the one downlink shared channel and the offset value; and a transmitting unit that transmits the feedback information for the reception of the multiple downlink shared channels at the determined resource position of the uplink control channel.

### [Advantageous Effects of Invention]

According to the disclosed technology, there is provided an extended HARQ technique in a case where multiple PDSCHs are scheduled by a single DCI.

### [Brief Description of Drawings]

[Fig. 1]

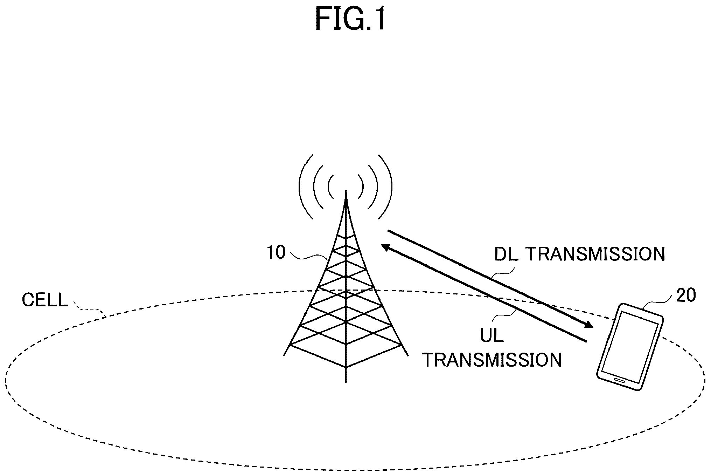

   Fig. 1 is a diagram for illustrating a radio communication system according to an embodiment of the present invention.
[Fig. 2]

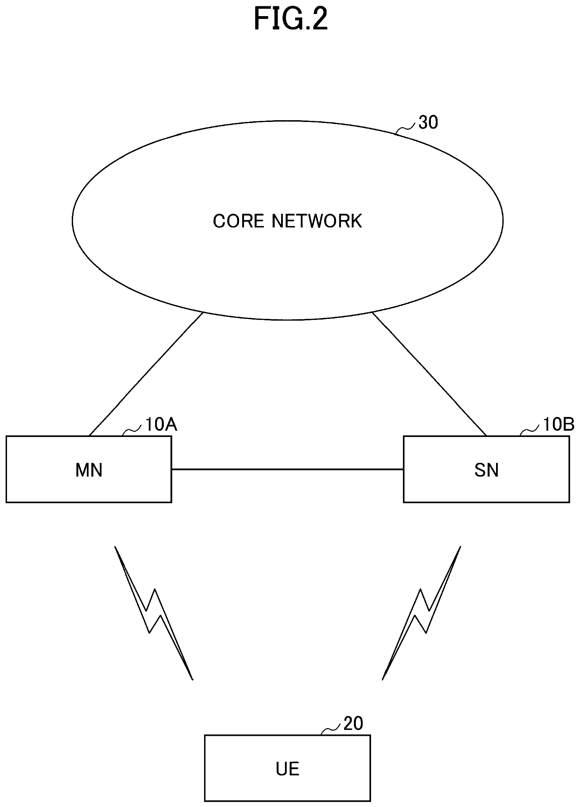

   Fig. 2 is a diagram illustrating a radio communication system according to an embodiment of the present invention.
[Fig. 3]
   Fig. 3 is a diagram illustrating an example of a frequency band used for radio communication.
[Fig. 4]

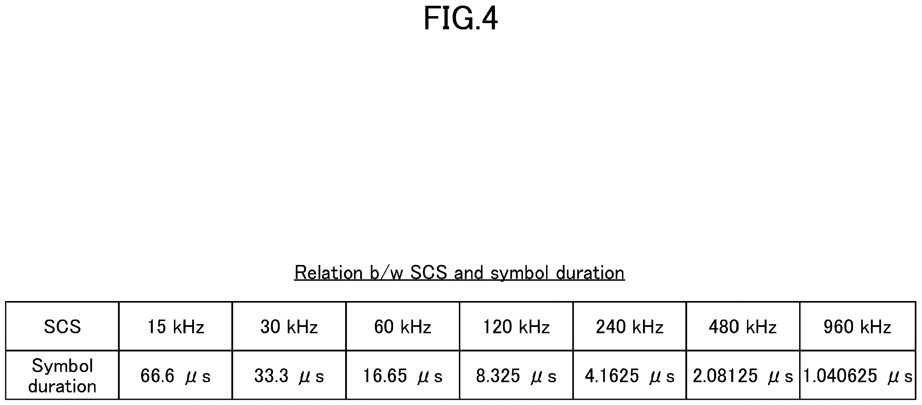

   Fig. 4 is a diagram illustrating an example of subcarrier spacing.
[Fig. 5]

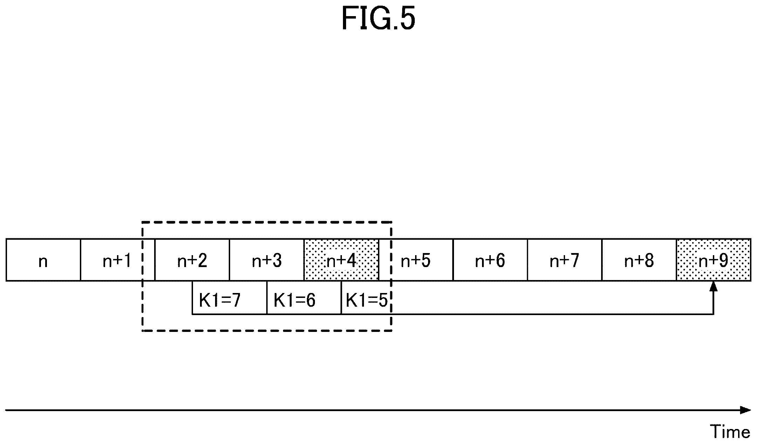

   Fig. 5 is a diagram illustrating an example of a method of generating a Type 1 HARQ-ACK codebook.
[Fig. 6]

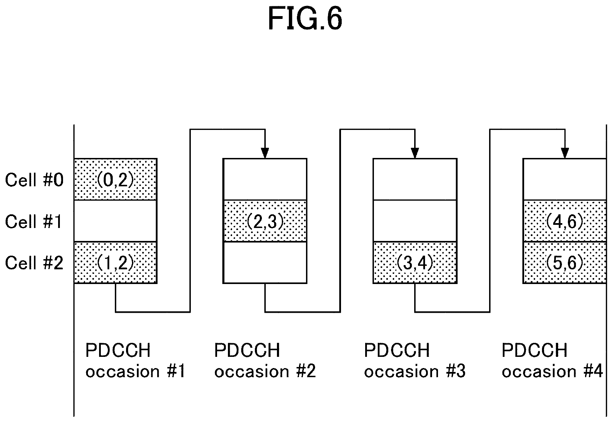

   Fig. 6 is a diagram illustrating an example of a method of generating a Type 2 HARQ-ACK codebook.
[Fig. 7]

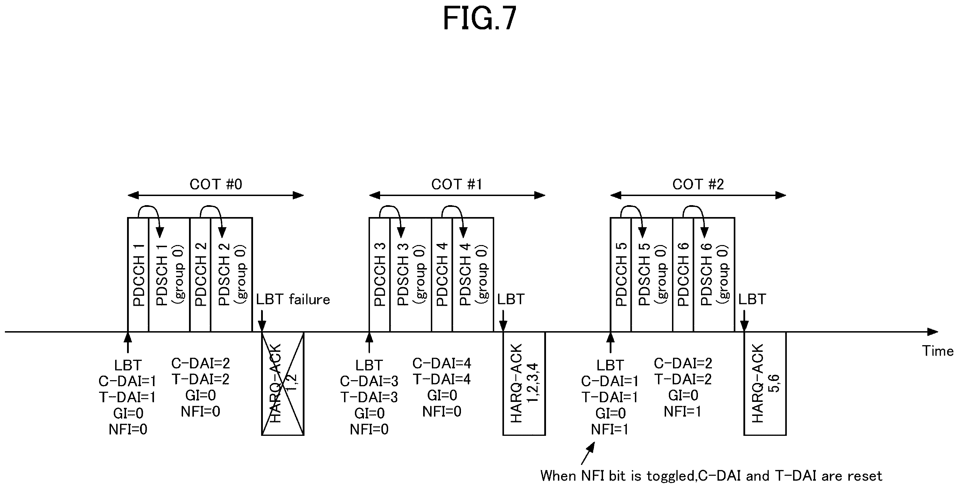

   Fig. 7 is a diagram illustrating an example of e-Type 2 HARQ-ACK feedback.
[Fig. 8]

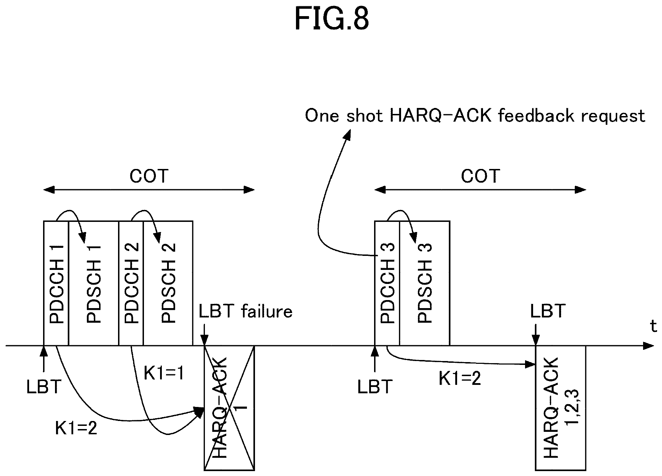

   Fig. 8 is a diagram illustrating an example of Type 3 HARQ-ACK feedback.
[Fig. 9]

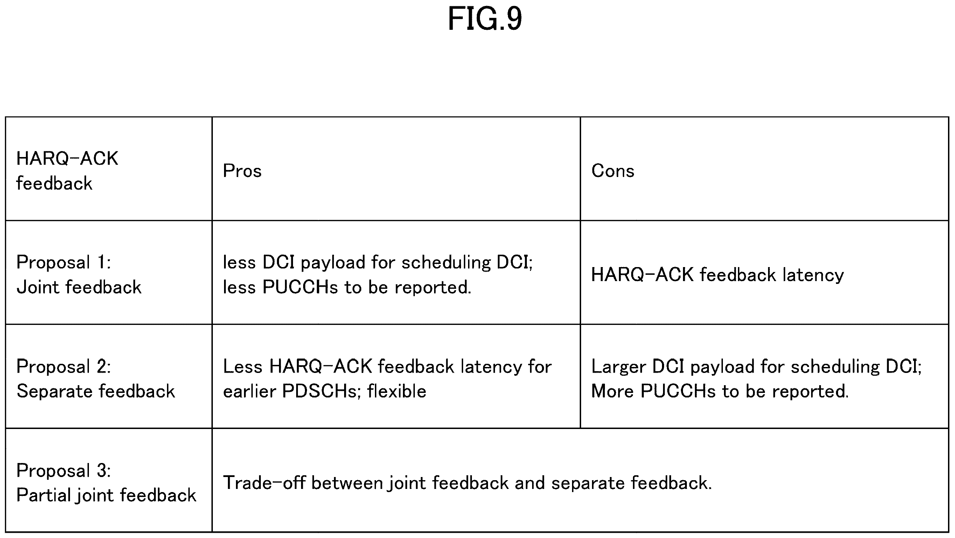

   Fig. 9 is a diagram illustrating a table summarizing characteristics of Proposal 1 through Proposal 3.
[Fig. 10]

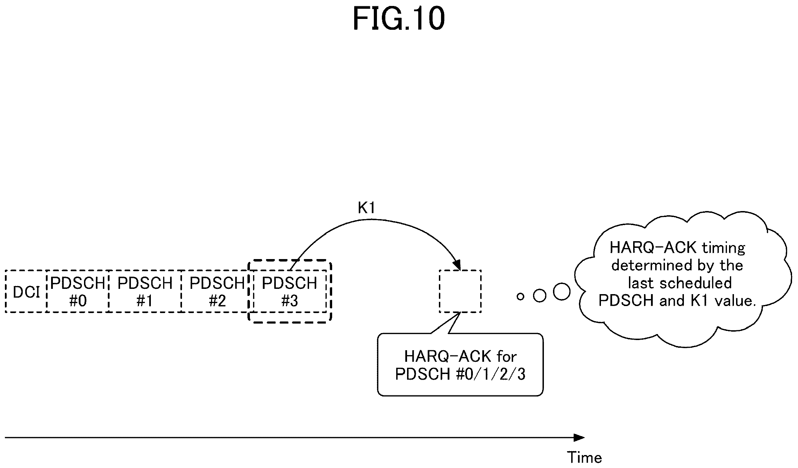

   Fig. 10 is a diagram illustrating an example of a case where multiple HARQ-ACKs for all the multiple PDSCHs scheduled by a single DCI are fed back by using a single PUCCH.
[Fig. 11]

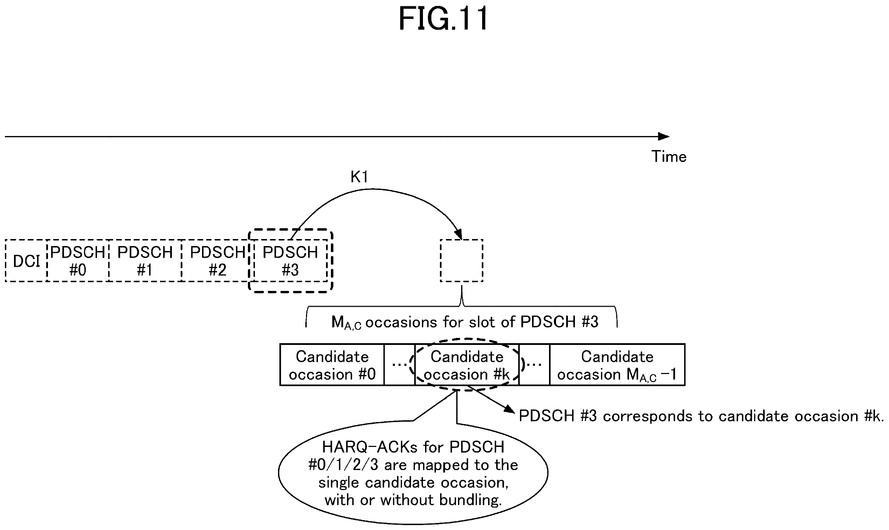

   Fig. 11 is a diagram illustrating an example of type 1 HARQ-ACK feedback for joint feedback.
[Fig. 12]

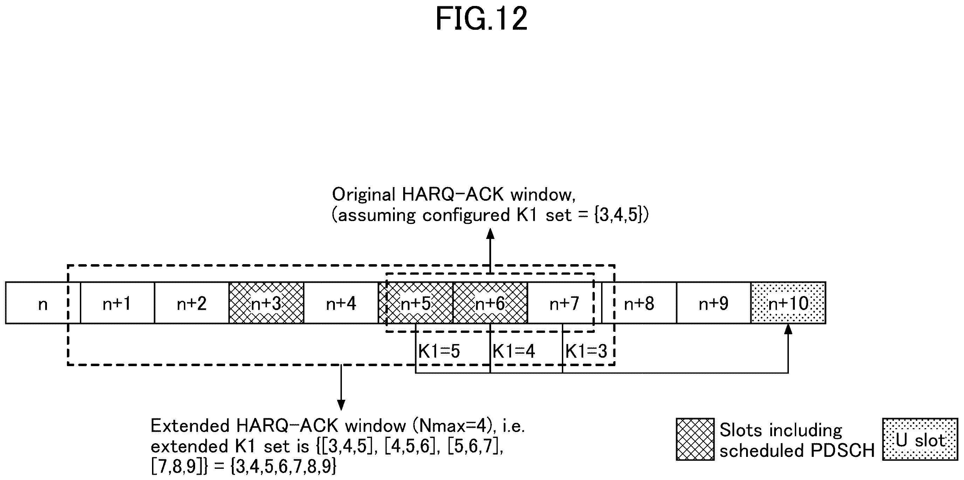

   Fig. 12 is a diagram illustrating an example in which a size of a HARQ-ACK window is extended.
[Fig. 13]

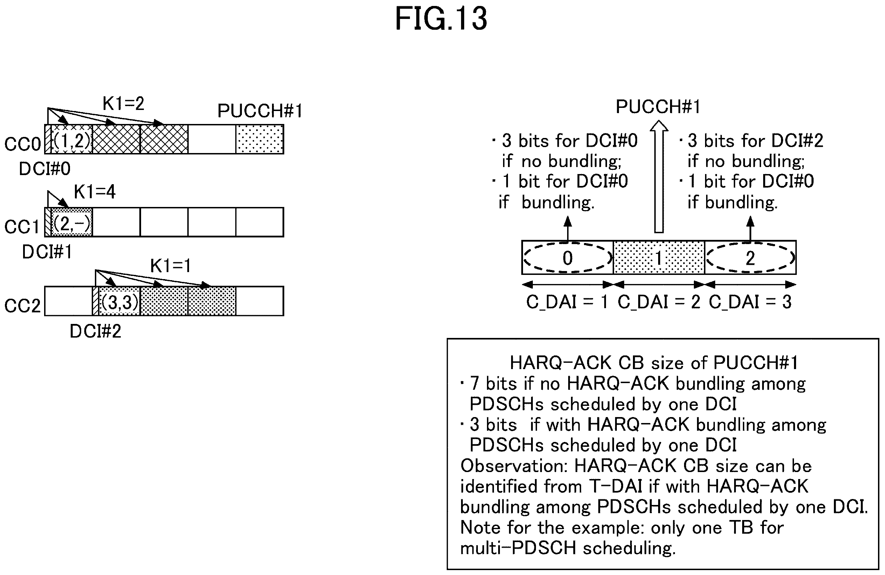

   Fig. 13 is a diagram illustrating an example of Option 1-2-1.
[Fig. 14]

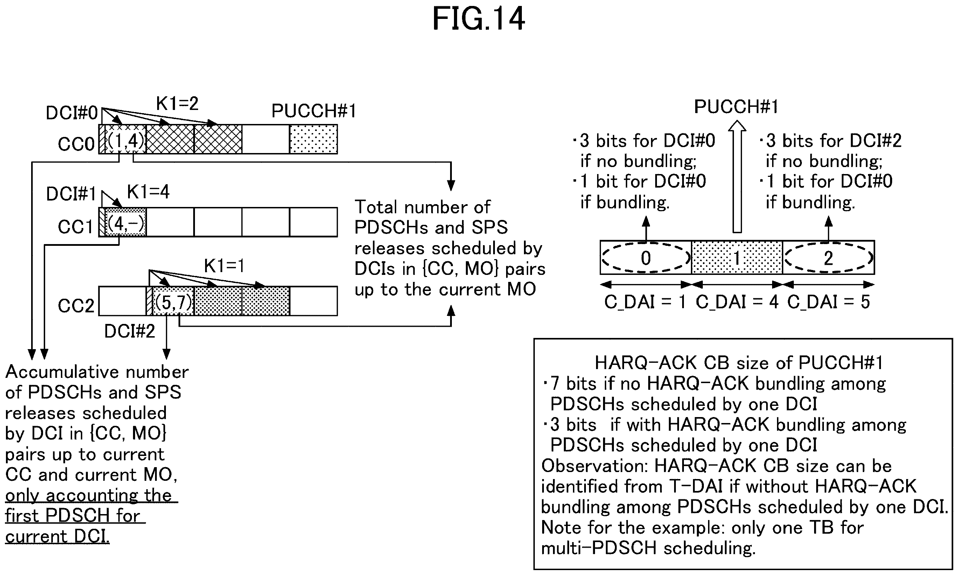

   Fig. 14 is a diagram illustrating an example of Option 1-2-2.
[Fig. 15]

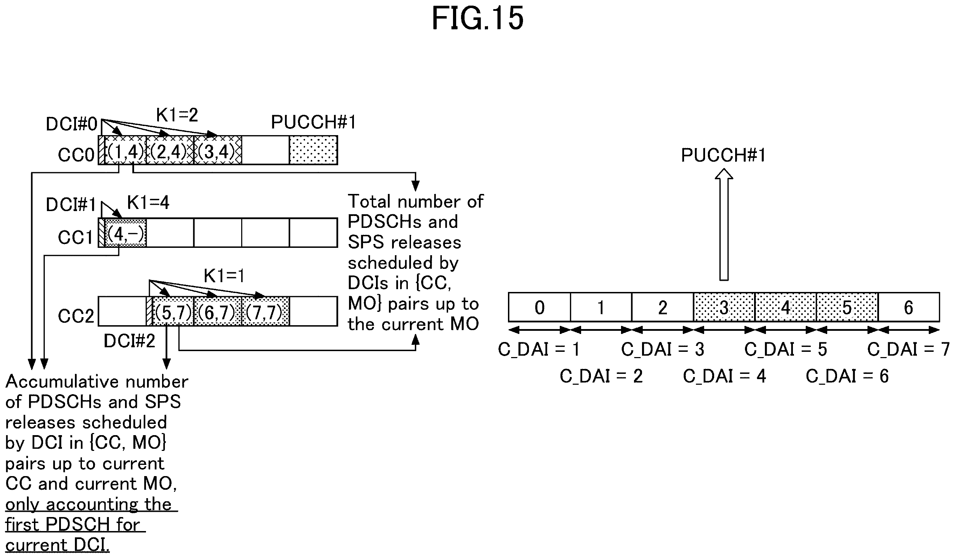

   Fig. 15 is a diagram illustrating an example of Option 1-2-3.
[Fig. 16]

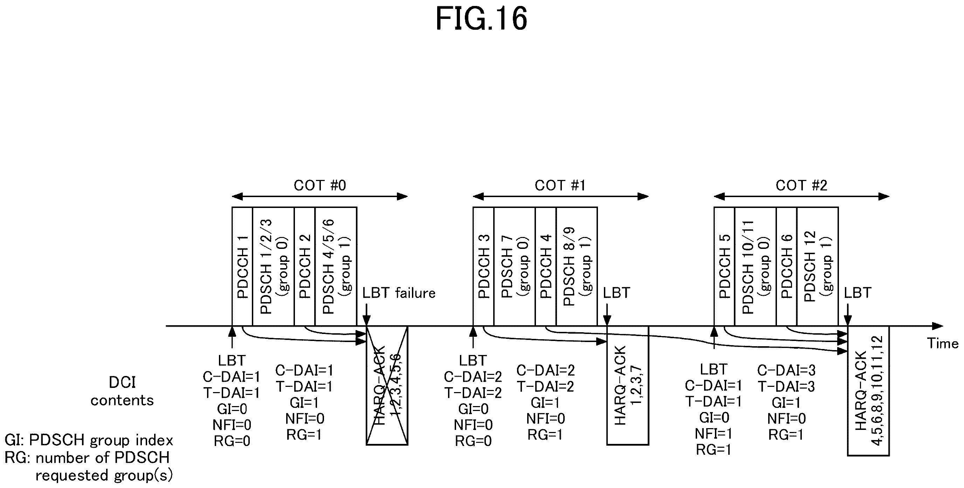

   Fig. 16 is a diagram illustrating an example of Option 1-3-1.
[Fig. 17]

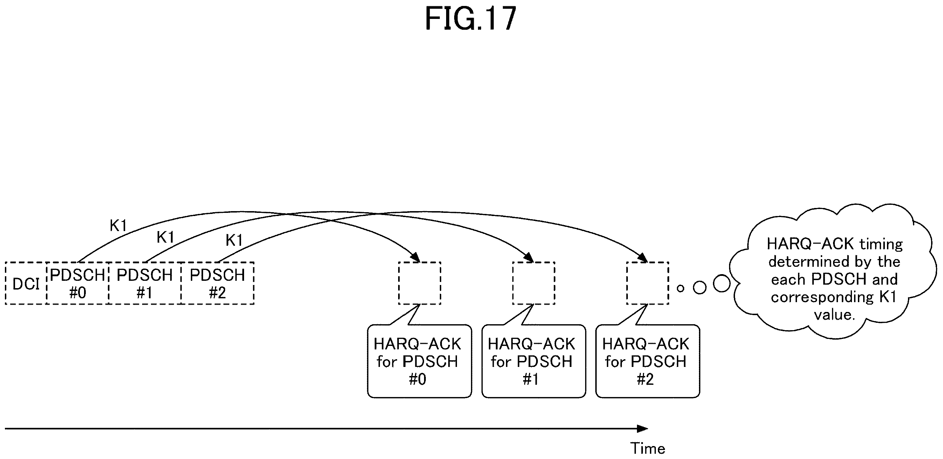

   Fig. 17 is a diagram illustrating an example in which multiple HARQ-ACKs are fed back by corresponding separate PUCCHs.
[Fig. 18]

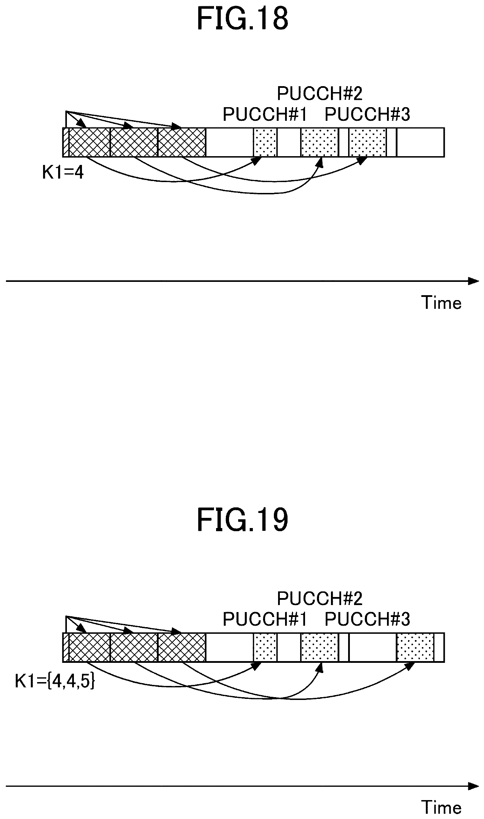

   Fig. 18 is a diagram illustrating an example of a case where scheduling DCI indicates a single common K1 value for multiple PDSCHs.
[Fig. 19]
   Fig. 19 is a diagram illustrating an example of a case where scheduling DCI indicates different K1 values for PDSCHs.
[Fig. 20]

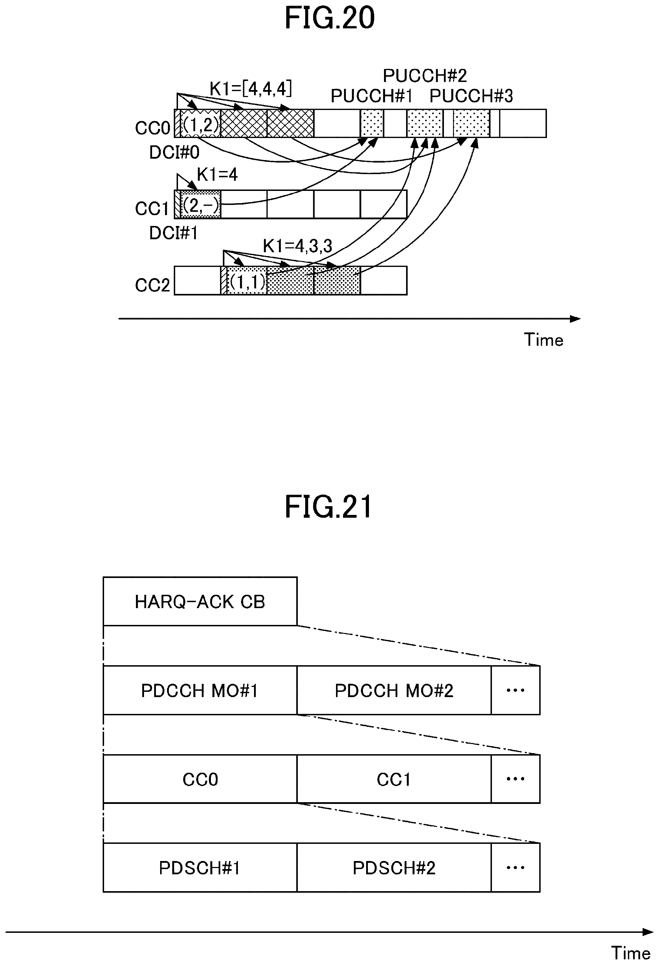

   Fig. 20 is a diagram illustrating an example of Option 2-1.
[Fig. 21]
   Fig. 21 is a diagram illustrating an example of order of HARQ-ACK bits of the Type 2 HARQ-ACK codebook.
[Fig. 22]

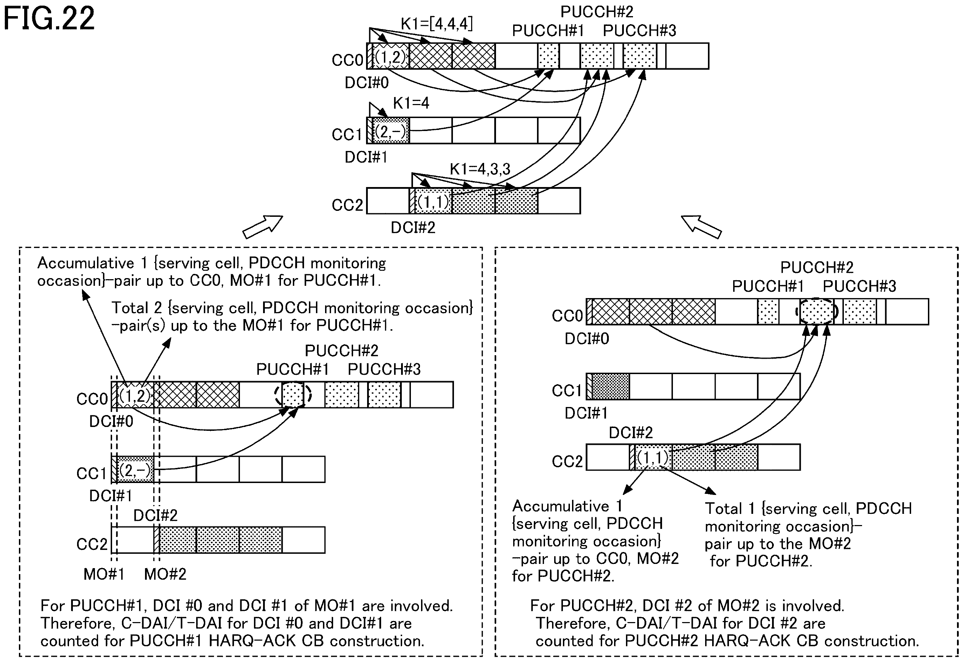

   Fig. 22 is a diagram illustrating details of the example of Option 1-2-1.
[Fig. 23]

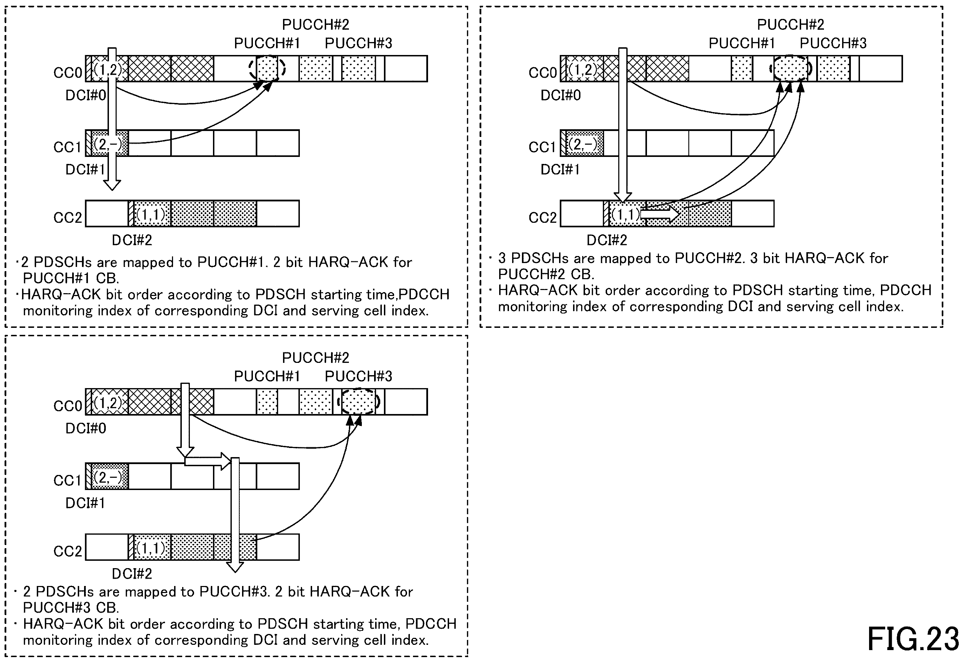

   Fig. 23 is a diagram illustrating an example of a configuration of the Type 2 HARQ-ACK codebook.
[Fig. 24]

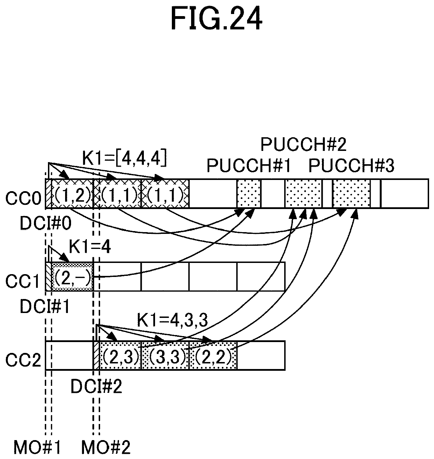

   Fig. 24 is a diagram illustrating an example of Option 2-2.
[Fig. 25]

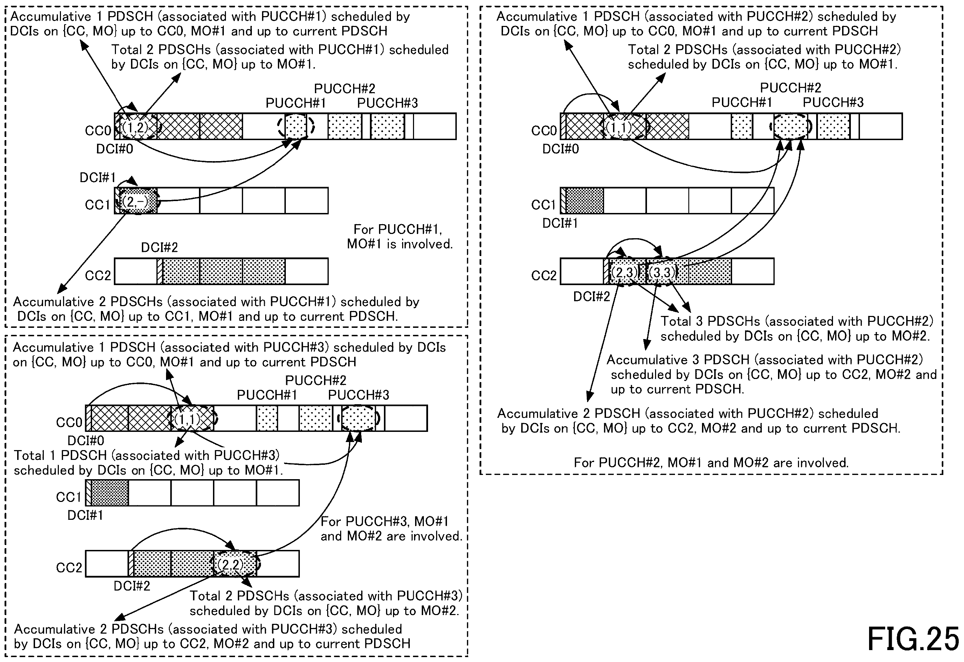

   Fig. 25 is a diagram illustrating details of the example of Option 2-2.
[Fig. 26]

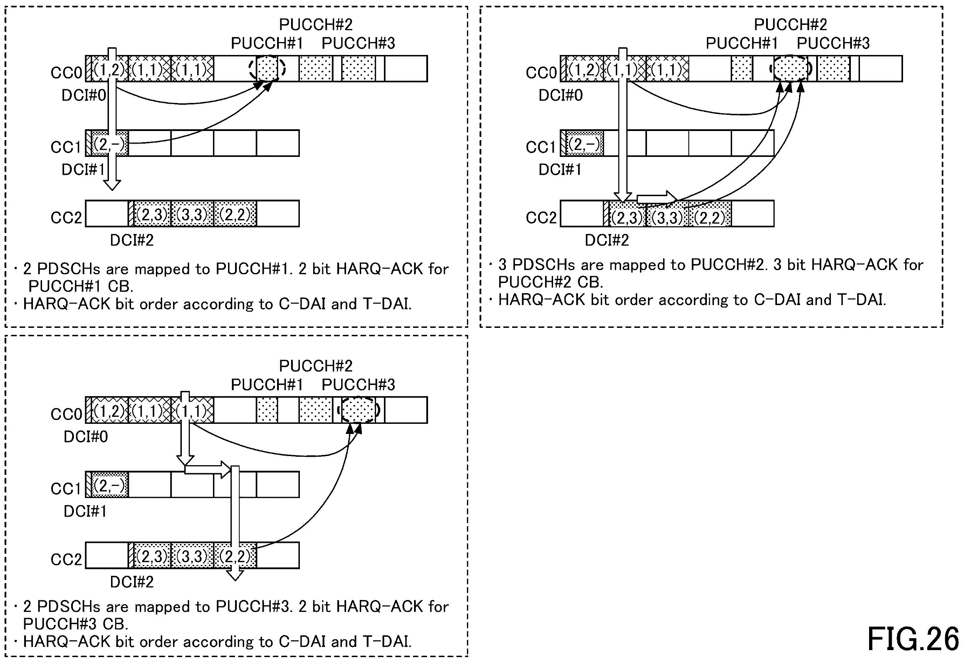

   Fig. 26 is a diagram illustrating an example of a method of configuring the Type 2 HARQ-ACK codebook according to Option 2-2.
[Fig. 27]

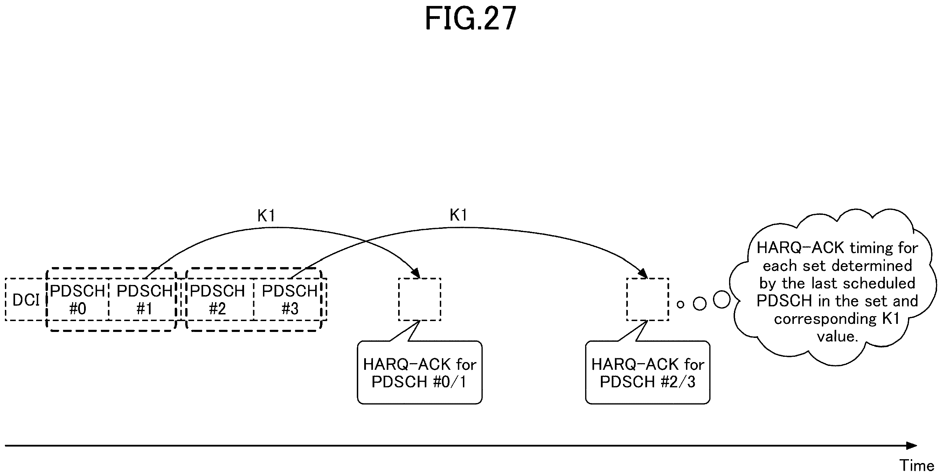

   Fig. 27 is a diagram illustrating an example of Proposals.
[Fig. 28]

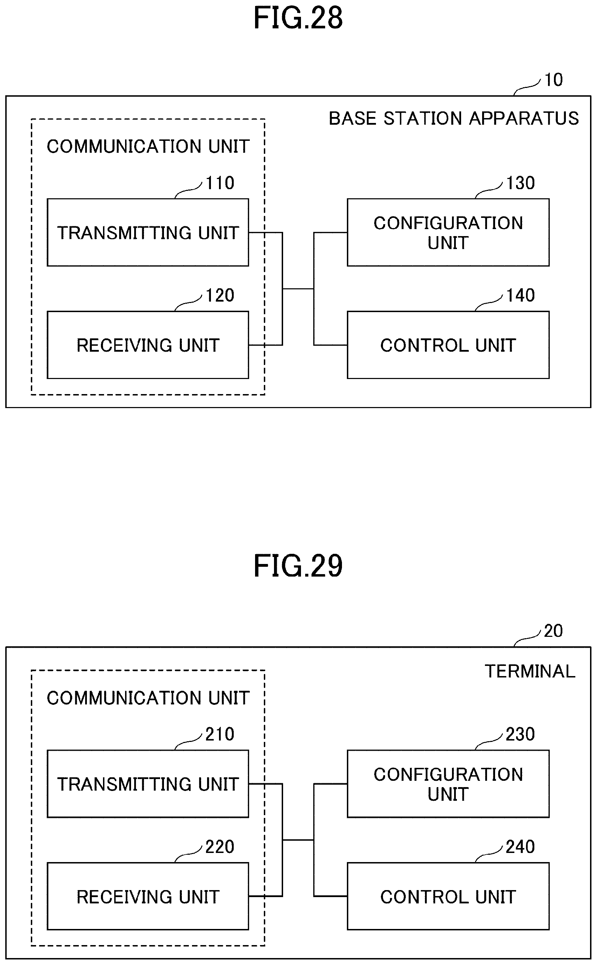

   Fig. 28 is a diagram illustrating an example of a functional configuration of the base station 10 in an embodiment of the present invention.
[Fig. 29]
   Fig. 29 is a diagram illustrating an example of a functional configuration of a terminal 20 in an embodiment of the present invention.
[Fig. 30]

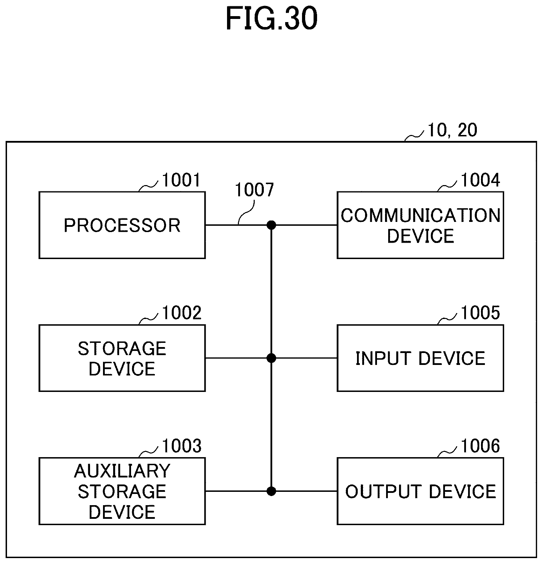

   Fig. 30 is a diagram illustrating an example of a hardware configuration of the base station 10 or the terminal 20 in an embodiment of the present invention.

### [Description of Embodiments]

In the following, embodiments of the present invention are described with reference to the drawings. Note that, the embodiments described below are examples, and embodiments to which the present invention is applied are not limited to the following embodiments.

In operating a radio communication system according to an embodiment of the present invention, existing technology may be used as appropriate. The existing technology is, for example, an existing NR or LTE, but is not limited to an existing NR or LTE.

### (System Configuration)

Fig. 1 is a diagram illustrating a radio communication system according to an embodiment of the present invention. The radio communication system according to an embodiment of the present invention includes a base station 10 and a terminal 20, as illustrated in Fig. 1. In Fig. 1, one base station 10 and one terminal 20 are illustrated. However, this is an example, and there may be a plurality of base stations 10 and a plurality of terminals 20.

The base station 10 is a communication device that provides one or more cells and performs radio communication with the terminal 20. A physical resource of a radio signal is defined in a time domain and a frequency domain, the time domain may be defined by a number of OFDM symbols, and the frequency domain may be defined by a number of sub-carriers or a number of resource blocks. A Transmission Time Interval (TTI) in the time domain may be a slot, or the TTI may be a subframe.

The base station 10 can perform carrier aggregation in which communication is performed with the terminal 20 by bundling a plurality of cells (a plurality of component carriers (CCs)). For carrier aggregation, one primary cell (PCell) and one or more secondary cells (SCells) are used.

The base station 10 transmits synchronization signals, system information, and the like to the terminal 20. The synchronization signals are, for example, NR-PSS and NR-SSS. System information is transmitted, for example, on NR-PBCH or PDSCH, and is also called broadcast information. As illustrated in Fig. 1, the base station 10 transmits a control signal or data to the terminal 20 via Downlink (DL) and receives a control signal or data from the terminal 20 via Uplink (UL). Here, a signal transmitted on a control channel, such as a PUCCH or a PDCCH, is referred to as a control signal, and a signal transmitted on a shared channel, such as a PUSCH or a PDSCH, is referred to as data. However, such names are examples.

The terminal 20 is a communication device provided with a radio communication function, such as a smartphone, a cellular phone, a tablet, a wearable terminal, or a communication module for Machine-to-Machine (M2M). As illustrated in Fig. 1, the terminal 20 utilizes various types of communication services provided by a radio communication system by receiving control signals or data via DL from the base station 10 and transmitting control signals or data via UL to the base station 10. The terminal 20 may be referred to as a UE, and the base station 10 may be referred to as a gNB.

The terminal 20 can perform carrier aggregation in which communication is performed with the base station 10 by bundling a plurality of cells (a plurality of component carriers (CCs)). For the carrier aggregation, one primary cell (PCell) and one or more secondary cells (SCells) are used. A PUCCH-SCell having a PUCCH may also be used.

Fig. 2 illustrates an example of a configuration of a radio communication system in a case in which Dual connectivity (DC) is executed. As illustrated in Fig. 2, a base station 10A serving as a Master Node (MN) and a base station 10B serving as a Secondary Node (SN) are provided. Each of the base station 10A and the base station 10B is connected to a core network. The terminal 20 can communicate with both the base station 10A and base station 10B.

A cell group provided by the base station 10A that is an MN is called a Master Cell Group (MCG), and a cell group provided by the base station 10B that is an SN is called a Secondary Cell Group (SCG). Furthermore, in DC, a MCG includes one PCell and one or more SCells, and an SCG includes one Primary SCell (PSCell) and one or more SCells.

The processing operation according to the embodiments may be performed in the system configuration illustrated in Fig. 1, in the system configuration illustrated in Fig. 2, or may be performed in another system configuration.

The 3GPP release 15 and release 16 New Radio (NR) specifications assume that a frequency band up to 52.6 GHz will be used for radio communications. As illustrated in Fig. 3, as a frequency band used for radio communication, a frequency range from 410 MHz to 7.125 GHz (Frequency Range 1 (FR1)) and a frequency range from 24.25 GHz to 52.6 GHz (Frequency Range (FR2)) are specified.

Currently, in the 3GPP, the use of frequency bands from 52.6 GHz to 71 GHz has been studied for radio communication as a frequency band other than FR1 and FR2 (Non-Patent Document 1 and Non-Patent Document 2).

Since the frequency band from 52.6 GHz to 71 GHz is a very high frequency band used for radio communication, when used for radio communication, problems may arise such as phase noise, high propagation loss, increased peak-to-average power ratio (PAPR), non-linearity of the power amplifier, and so forth.

Here, phase noise is a phase variation generated by a frequency component other than the carrier frequency in the local source signal. PAPR is an indicator of the peak magnitude of the transmit waveform and is a ratio of the maximum power to the average power. If the PAPR is large, it is necessary to increase the backoff of a power amplifier on the transmitting side to avoid signal distortion.

In order to address the phase noise problem, it may be necessary to use a larger subcarrier spacing than the normal subcarrier spacing (SCS: Subcarrier Spacing) or to use a single carrier waveform.

A large number of narrow beams may be required to address the problem of the high propagation loss.

Accordingly, it is possible to use either Cyclic Prefix (CP)-OFDM with high subcarrier spacing or Discrete Fourier Transform-spread-Orthogonal Frequency Division Multiplexing (DFT-S-OFDM) with high subcarrier spacing as the digital signal modulation scheme used from 52.6 GHz to 71 GHz.

The 3GPP specification specifies that one slot shall consist of 14 symbols. Thus, as the sub-carrier spacing (SCS) increases, the symbol length/CP length decreases and the slot length decreases, as illustrated in Fig. 4.

The sub-carrier spacing between 120 kHz and 960 kHz may be supported as the sub-carrier spacing for use in radio communication between 52.6 GHz and 71 GHz. It is assumed that, for example, 120 kHz subcarrier spacing, 480 kHz subcarrier spacing, and 960 kHz subcarrier spacing will be used for data communication. For example, a 240 kHz subcarrier spacing may be used to transmit the synchronization signal block (SSB) used for initial access.

### (HARQ-ACK codebook)

An overview of the HARQ-ACK codebook for DL transmission is described.

The HARQ-ACK codebook (codebook) defines a method of bundling when multiple HARQ-ACKs are to be transmitted while being bundled and multiplexed. A HARQ-ACK codebook may be formed to include one or more bits for HARQ-ACK in at least one of a time domain unit (e.g., slot), a frequency domain unit (e.g., component carrier (CC)), a spatial domain unit (e.g., layer), a transport block unit (Transport Block (TB)), and a code block group (Code Block Group (CBG)) unit forming a TB. Note that a CC may also be referred to as a serving cell, a carrier, or the like. Furthermore, the one or more bits may also be referred to as a HARQ-ACK bit, HARQ-ACK information, a HARQ-ACK information bit, or the like. The HARQ-ACK codebook may also be referred to as a PDSCH-HARQ-ACK codebook (pdsch-HARQ-ACK codebook), a codebook, a HARQ codebook, a HARQ-ACK size, or the like.

The number of bits (size) or the like included in the HARQ-ACK codebook may be determined semi-statically or dynamically. A semi-static HARQ-ACK codebook is also referred to as a Type 1 HARQ-ACK codebook, a semi-static codebook, or the like. A dynamic HARQ-ACK codebook is also referred to as a Type 2 HARQ-ACK codebook, a dynamic codebook, or the like.

By using a higher layer parameter (e.g., pdsch-HARQ-ACK-Codebook), the terminal 20 may be configured as to whether the Type 1 HARQ-ACK codebook is to be used or the Type 2 HARQ-ACK codebook is to be used.

In the case of the Type 1 HARQ-ACK codebook, in a predetermined range (e.g., a range defined based on a higher layer parameter), the terminal 20 may feed back HARQ-ACK bits corresponding to the predetermined range, regardless of presence or absence of PDSCH scheduling.

The predetermined range may be defined based on at least one of a predetermined time interval (e.g., a set of a predetermined number of PDSCH reception occasion candidates, or a predetermined number of PDCCH monitoring occasions), a number of CCs configured or activated for the terminal 20, a number of TBs (a number of layers or a rank), a number of CBGs per one TB, or presence or absence of application of spatial bundling. The predefined range may also be referred to as a HARQ-ACK bundling window, a HARQ-ACK feedback window, a bundling window, a feedback window, or the like.

In the Type 1 HARQ-ACK codebook, the terminal 20 feeds back NACK bits, even if there is no PDSCH scheduling to the terminal 20, provided that the range is within the predetermined range. Accordingly, if the Type 1 HARQ-ACK codebook is used, it is expected that the number of HARQ-ACK bits to be fed back increases.

In the case of the Type 2 HARQ-ACK codebook, the terminal 20 may feed back HARQ-ACK bits for the scheduled PDSCH in the predetermined range described above.

Specifically, the terminal 20 may determine the number of bits of the Type 2 HARQ-ACK codebook based on a predetermined field in DCI (e.g., the DL assignment Indicator (Index) (DAI) field). The DAI field may be split into a counter DAI (counter DAI (cDAI)) and a total DAI (total DAI (tDAI)).

The counter DAI may indicate a counter value of a downlink transmission (PDSCH, data, TB) scheduled within a predetermined time interval. For example, the counter DAI in the DCI for scheduling data within the predetermined time interval may indicate the number of times counted within the predetermined time interval, first in the frequency domain (e.g., CC) and, subsequently, in the time domain.

The total DAI may indicate a total value (a total number) of data scheduled within a predetermined time interval. For example, a total DAI within DCI for scheduling data at a predetermined time unit (e.g., a PDCCH monitoring occasion) within the predetermined time interval may indicate the total number of data scheduled until the predetermined time unit (also referred to as a point or timing) within the predetermined time interval.

The terminal 20 may transmit one or more HARQ-ACK bits determined (generated) based on the above-described type 1 or type 1I HARQ-ACK codebook using at least one of a Physical Uplink Control Channel (PUCCH) or a Physical Uplink Shared Channel (PUSCH).

For the Type 1 HARQ-ACK codebook, the terminal 20 generates HARQ-ACK bits so that the number of bits of the HARQ-ACK bits corresponds to the number of candidates for PDCCH/PDSCH transmissions that may be transmitted from the base station 10, instead of the actual PDCCH/PDSCH transmissions from the base station 10. Namely, the terminal 20 transmits HARQ-ACK bits corresponding to the PDCCH/PDSCH transmission occasions at which the PDCCH/PDSCH may be transmitted from the base station 10, regardless of whether the PDCCH/PDSCH is actually transmitted from the base station 10. For example, if no PDCCH transmission from the base station 10 is performed at the PDCCH transmission occasion from the base station 10, the terminal 20 may transmit a NACK.

For the Type 2 HARQ-ACK codebook, the terminal 20 generates HARQ-ACK bits so that the number of bits of the HARQ-ACK bits corresponds to the number of PDCCH/PDSCH signals that are expected to be actually transmitted from the base station 10. Here, since it is likely that a PDCCH signal from the base station 10 is unable to be received at the terminal 20, a notification of the number of the PDCCH signals transmitted from the base station 10 to the terminal 20 may be transmitted by including a DAI in the DCI.

### (Generating a Release 16 Type 1 HARQ-ACK codebook)

As described above, for the Type 1 HARQ-ACK codebook, the number of bits (size) or the like included in the HARQ-ACK codebook is semi-statically determined. For the Type 1 HARQ-ACK codebook, the terminal 20 feeds back, in the HARQ-ACK window (e.g., the range configured based on a higher layer parameter), HARQ-ACK bits corresponding to all the PDSCH reception candidate positions included in the HARQ-ACK window, regardless of presence or absence of the PDSCH scheduling.

Fig. 5 is a diagram illustrating an example of a method for generating a Type 1 HARQ-ACK codebook. As illustrated in Fig. 5, the size of the HARQ-ACK codebook is determined by the size of the HARQ-ACK window (the window indicated by the dotted line in the example of Fig. 5) determined by the value of K1 (the values of multiple Kls) and the number of PDSCH reception candidate positions included in the HARQ-ACK window. In the example of Fig. 5, since the value of K1 for the PDSCH reception candidate position of slot n+2 is 7, the value of K1 for the PDSCH reception candidate position of slot n+3 is 6, and the value of K1 for the PDSCH reception candidate position of slot n+4 is 5, the HARQ-ACK for the PDSCH reception candidate position of slot n+2, the PDSCH reception candidate position of slot n+3, and the PDSCH reception candidate position of slot n+4 are collectively transmitted in slot n+9.

In other words, for the Type 1 HARQ-ACK codebook, a set of K1 values is set in a higher layer, and a HARQ-ACK window is configured so that the set of K1 values can be covered.

### (Generating a Release 16 Type 2 HARQ-ACK codebook)

For the Type 2 HARQ-ACK codebook, the terminal 20 determines the number of bits of the HARQ-ACK codebook based on the number of PDSCH actually transmitted in the HARQ-ACK window, which is determined by a set of K1 values.

Specifically, the terminal 20 determines the number of bits of the Type 2 HARQ-ACK codebook based on a predetermined field in the DCI (e.g., the Downlink Assignment Indicator (Index) (DAI) field). The DAI field is split into a counter DAI (counter DAI (cDAI)) and a total DAI (total DAI (tDAI)).

The counter DAI indicates a counter value of downlink transmissions (PDSCH, data, TB) scheduled in the HARQ-ACK window. For example, the counter DAI in the DCI for scheduling data in the HARQ-ACK window indicates a counted number in the HARQ-ACK window, first in the frequency domain (e.g., CC) and, subsequently, in the time domain.

The total DAI may indicate a total value (total number) of data scheduled within the HARQ-ACK window. For example, the total DAI in the DCI for scheduling data at a predetermined time unit within the HARQ-ACK window (e.g., PDCCH monitoring occasion (PDCCH occasion)) may indicate the total number of scheduled data until the predetermined time unit within the HARQ-ACK window.

Fig. 6 is a diagram illustrating an example of a method for generating a Type 2 HARQ-ACK codebook. In the example of Fig. 6, the terminal 20 receives DCI in cell #0 and cell #2 at the PDCCH occasion #1. The terminal 20 receives DCI in cell #1 at the PDCCH occasion #2. The terminal 20 receives DCI in cell #2 at the PDCCH occasion #3. The terminal 20 receives DCI in cell #1 and cell #2 at the PDCCH occasion #4.

In the example of Fig. 6, the value on the left in a parenthesis indicates the value of counter DAI, and the value on the right in the parenthesis indicates the value of total DAI. At PDCCH occasion #1, the DAI included in the DCI received in cell #0 is (0, 2), and the DAI included in the DCI received in cell #2 is (1, 2). At PDCCH occasion #2, the DAI included in the DCI received in Cell #1 is (2, 3). At PDCCH occasion #3, the DAI included in the DCI received in Cell #2 is (3, 4). At PDCCH occasion #4, the DAI included in the DCI received in Cell #1 is (4, 6), and the DAI included in the DCI received in Cell #2 is (5, 6). In the case of Fig. 6, since the total value (the total number) of data scheduled in the HARQ-ACK window is 6, the terminal 20 determines that the number of bits of the HARQ-ACK is six and transmits the 6-bit HARQ-ACK using, for example, a Physical Uplink Control Channel (PUCCH) determined by the value of K1. The terminal 20 determines the order of HARQ-ACK bits in a PUCCH resource based on the DAI.

### (Release 16 e-Type 2 HARQ-ACK feedback)

The e-Type 2 HARQ-ACK feedback has been introduced in the Release 16 NR. This is a mechanism introduced for NR-U. DCI format1_1 indicates HARQ feedback for one scheduled PDSCH group or two scheduled PDSCH groups. For example, in a case where the number of groups is two, the two groups may be group 0 for HARQ feedback at Channel Occupancy Time (COT)#0 and group 1 for HARQ feedback at COT#1. As described, during scheduling of the PDSCH, indexes indicating group numbers can be attached in advance. The number of the groups may be two, and, in this case, the indexes are 0 and 1.

Fig. 7 is a diagram illustrating an example of e-Type 2 HARQ-ACK feedback. As illustrated in Fig. 7, for example, suppose that, in COT#0, the feedback (HARQ-ACK1, 2) for group 0 has been scheduled, but the feedback (HARQ ACK1, 2) for group 0 is unable to be transmitted because the Listen Before Talk (LBT) failed. In such a case, feedback for the PDSCH group 0 can be performed again at another timing. In the example of Fig. 7, the terminal 20 transmits the HARQ-ACK1, 2 that was unable to be transmitted at COT#0 by including the HARQ-ACK1, 2 in the HARQ-ACK3, 4 for the PDSCH3 and the PDSCH4 at COT#1. In Fig. 7, GI is a Group Indicator. Furthermore, FI is a new feedback indicator, and if the bit of the NFI is toggled, the bit of the HARQ-ACK previously held by the terminal 20 is deleted. In the example of Fig. 7, since the terminal 20 has transmitted the HARQ-ACK 1, 2, 3, 4 at COT #1, at COT #2, a notification of the value 1 is transmitted in the DCI as the value of the NFI, and, thus, the terminal 20 deletes the HARQ-ACK1, 2, 3, 4 that has been retained so far, and the terminal 20 newly stores the HARQ-ACK bits for the PDSCH5 and the PDSCH6.

### (Release 16 Type 3 HARQ-ACK feedback)

The type-3 HARQ-ACK feedback may also be referred to as One-shot HARQ feedback. In Type-3 HARQ-ACK feedback, the terminal 20 feeds back all the HARQ-ACK bits currently held by the terminal 20. Type-3 HARQ-ACK feedback is also introduced in NR-U as a measure in the event that the terminal 20 is unable to transmit HARQ-ACK due to an LBT failure.

Fig. 8 is a diagram illustrating an example of the Type-3 HARQ-ACK feedback. For example, suppose that the terminal 20 attempts to transmit HARQ-ACK for the PDSCH1 and the PDSCH2, but the terminal 20 is unable to transmit the HARQ-ACK due to an LBT failure. Suppose that, subsequently, the terminal 20 receives PDCCH3 and that the PDCCH3 includes a request for the Type-3 HARQ-ACK feedback. In this case, the terminal 20 transmits not only the HARQ-ACK for the PDSCH3 but also all the HARQ-ACK bits currently held by the terminal 20 to the base station 10. In the example of Fig. 8, the terminal 20 transmits the HARQ-ACK1, 2, 3.

### (Problem)

It has been studied to reduce the PDCCH monitoring capability of the terminal 20, for example, by using a large-sized monitoring unit, in which multiple slots are used as a unit. It can be considered that, if a large-sized PDCCH monitoring unit is supported, flexibility in data scheduling can be ensured by scheduling multiple PDSCHs or multiple PUSCHs by using a single PDCCH.

An extension of HARQ is studied below in a case where multiple PDSCHs are scheduled by a single PDCCH.

In regard to the HARQ-ACK reporting by the terminal 20, a method of determining the HARQ-ACK timing, a PUCCH resource indicator (PRI) for selecting a PUCCH resource, and a Transmission Power Control (TPC) command for a PUCCH transmission are discussed.

Furthermore, regarding the generation of the HARQ-ACK codebook by the terminal 20, generation and reporting of the type 1 HARQ-ACK CB, generation and reporting of the type 2 HARQ-ACK CB, and generation and reporting of the e-type 2 HARQ-ACK CB are discussed.

In the following, Proposal 1, Proposal 2, and Proposal 3 for HARQ-ACK feedback are described.

Proposal 1 is a method of transmitting multiple feedbacks for multiple PDSCHs by bundling the multiple feedbacks into one PUCCH.

Proposal 2 is a method of separately transmitting multiple feedbacks for multiple PDSCHs by using corresponding different PUCCHs.

Proposal 3 is a method of transmitting multiple feedbacks for multiple PDSCHs by dividing the multiple PDSCHs into several groups and by using PUCCHs corresponding to respective groups.

Fig. 9 is a table summarizing the features of Proposal 1 through Proposal 3. As illustrated in Fig. 9, Proposal 1 reduces the payload of the DCI and reduces the number of PUCCHs used for feedback. However, the latency of HARQ-ACK feedback is increased. Proposal 2 reduces the latency of HARQ-ACK feedback and allows more flexibility in HARQ-ACK feedback. However, the payload of the scheduling DCI increases and the number of PUCCHs used for feedback increases. Proposal 3 has properties between Proposal 1 and Proposal 2.

### (Proposal 1: Joint HARQ-ACK feedback)

The terminal 20 may feed back, by using a single PUCCH, multiple HARQ-ACKs for all the multiple PDSCHs scheduled by a single DCI.

If the terminal 20 feeds back, by using the single PUCCH, multiple HARQ-ACKs for all the multiple PDSCHs scheduled by the single DCI, the terminal 20 may determine the timing at which the HARQ-ACK is to be transmitted based on the last PDSCH slot in time from among the multiple PDSCHs scheduled by the single DCI and the K1 value. The K1 value may be an offset value from the position of the last PDSCH slot in time from among the multiple PDSCHs scheduled by the single DCI to the position of the PUCCH slot in which the corresponding HARQ-ACK is to be transmitted.

Fig. 10 is a diagram illustrating an example of a case in which multiple HARQ-ACKs for all the PDSCHs scheduled by a single DCI are fed back by using a single PUCCH.

As illustrated in Fig. 10, the terminal 20 may transmit the HARQ-ACK feedback for PDSCH#0, PDSCH#1, PDSCH#2, and PDSCH#3 scheduled by a single DCI at the position of the PUCCH resource determined by the resource position of the last received PDSCH#3 in time, from among the PDSCH#1, PDSCH#2, and PDSCH#3, and the K1 value.

As a PDSCH-HARQ feedback timing indicator field, the scheduling DCI may indicate a single K1 value for all the scheduled PDSCHs. As a PUCCH Resource Indicator field, the scheduling DCI may indicate a single PUCCH Resource Indicator (PRI) value for all the multiple scheduled PDSCHs. The PUCCH resource may be determined by the PRI of the last DCI associated with the PUCCH for transmitting the HARQ-ACK. As a PUCCH power control field, the scheduling DCI may indicate a single TPC command value for the PUCCH for transmitting the HARQ-ACK for all the scheduled PDSCHs.

### (Type 1 HARQ-ACK feedback for joint feedback)

The terminal 20 may feed back, by using a single PUCCH, multiple HARQ-ACKs for all the multiple PDSCHs scheduled by a single DCI by applying a Type 1 HARQ-ACK codebook.

Fig. 11 is a diagram illustrating an example of type 1 HARQ-ACK feedback for joint feedback. As illustrated in Fig. 11, if the PDSCH#3 corresponds to the transmission candidate position #k of the HARQ-ACK, the terminal 20 may map the HARQ-ACKs for the PDSCH#0, PDSCH#1, PDSCH#2, and PDSCH#3 onto a single transmission candidate position (the HARQ-ACK transmission candidate position #k). In this case, the terminal 20 may or may not apply bundling.

### (Option 1-1-1)

The terminal 20 may map HARQ-ACK information for all the multiple PDSCHs scheduled by a single DCI onto a HARQ-ACK transmission candidate position corresponding to the last PDSCH scheduled in time, from among the multiple scheduled PDSCHs.

(Alt1) The terminal 20 need not apply bundling to the multiple HARQ-ACKs corresponding to the multiple PDSCHs. For example, in Fig. 11, the terminal 20 may transmit the HARQ-ACK for the PDSCH#0, PDSCH#1, PDSCH#2, and PDSCH#3 at the transmission candidate position #k, which is the transmission candidate position of the PDSCH#3. In this case, since the terminal 20 does not apply bundling to the multiple HARQ-ACKs for PDSCH#0, PDSCH#1, PDSCH#2, and PDSCH#3, the number of bits required for transmitting the HARQ-ACK is four.

(Alt2) The terminal 20 may apply bundling to the multiple HARQ-ACKs corresponding to the multiple PDSCHs. The terminal 20 may bundle the multiple HARQ-ACKs corresponding to the multiple PDSCHs into the M-bit HARQ-ACK bits.

(Alt2-1) The above-described M may be specified in a technical specification. For example, it may be a fixed 1 bit.

(Alt2-2) The above-described M may be configured by RRC signaling.

(Alt2-2A) The HARQ bundle unit may be set to N1 by RRC signaling. That is, HARQ-ACK for the scheduled N1 PDSCHs may be bundled into a single HARQ-ACK bit. In this case, the number of HARQ-ACK bits fed back for the scheduled N PDSCHs may be ceil (N/N1).

(Alt2-2B) The number of HARQ-ACK bits fed back for the scheduled N PDSCHs may be set to M by RRC signaling. That is, HARQ-ACKs for the scheduled ceil (N/M) PDSCHs may be bundled into a single HARQ-ACK bit.

(Case1) If a higher layer parameter harq-ACK-SpatialBundlingPUCCH is not configured, and a MIMO transmission with two-layer transmissions (two transport blocks are transmitted in the same slot) is configured for the terminal 20, Alt1 may be applied. The terminal 20 need not apply bundling to multiple HARQ-ACKs corresponding to multiple PDSCHs.

(Case 2) Alt1 and/or Alt2 may be applied if the higher layer parameter harq-ACK-SpatialBundlingPUCCH is configured or if two-layer transmission (two transport blocks are transmitted in the same slot) is not configured for the terminal 20. The terminal 20 may or may not apply bundling to multiple HARQ-ACKs corresponding to multiple PDSCHs.

### (Option 1-1-2)

The size of the HARQ-ACK window may be extended.

To determine the extended HARQ-ACK window, for example, the K1 set may be extended so that {K1}, {K1+1}, {K1+2}, ..., {K1+Nmax} are included. Here, Nmax is the maximum number of the scheduled slots for scheduling of the multiple PDSCHs. Nmax may be specified in a technical specification or configured by RRC signaling.

Fig. 12 is a diagram illustrating an example in which the size of the HARQ-ACK window is extended. In the example of Fig. 12, a single DCI schedules multiple PDSCHs at slot n+3, slot n+5, and slot n+6, and K1=4. The multiple HARQ-ACKs for the scheduled multiple PDSCHs are fed back in slot n+10 (the last PDSCH slot + K1).

As illustrated in Fig. 12, suppose that the K1 set before being extended was {3, 4, 5}. The HARQ-ACK window before being extended includes slot n+5 to slot n+7. In this case, suppose that Nmax is set to 4. The K1 set is extended to include {3, 4, 5}, {4, 5, 6}, {5, 6, 7}, and {6, 7, 8}. That is, the K1 set is extended to {3,4,5,6,7,8}. Accordingly, the HARQ-ACK window is extended to include slots n+1 through slot n+7.

### (Type 2 HARQ-ACK feedback for joint feedback)

The terminal 20 may apply a Type 2 HARQ-ACK codebook to feed back multiple HARQ-ACKs for all the multiple PDSCHs scheduled by a single DCI in one PUCCH.

### (Option 1-2-1)

Only one C-DAI and one T-DAI (if present) may be included in the DCI scheduling PDSCH. In this case, C-DAI and T-DAI (if present) may be counted based on DCI. The C-DAI may indicate the cumulative number of combinations of {CC, PDCCH monitoring occasion} up to the current combination of {CC, PDCCH monitoring occasion}. T-DAI may indicate the total number of {CC, PDCCH monitoring occasion} up to the current PDCCH monitoring occasion.

Fig. 13 is a diagram illustrating an example of Option 1-2-1.

For example, as illustrated in the left side of Fig. 13, DCI#0 is received in the first slot of CC0, and DCI#1 is received in the first slot of CC1. The C-DAI counts the number of these DCIs. In response to DCI#0 on CC0, C-DAI becomes 1, and in response to DCI#1 on CC1, C-DAI becomes 2. In addition, DCI#2 is received in the next slot of CC2. The C-DAI is set to 3 and the T-DAI is set to 3 in response to the DCI#2 on CC2.

Note that Option 1-2-1 can be applied to a certain condition. Option 1-2-1 can be applied to the condition in which the HARQ-ACK bundling is applied to multiple PDSCHs scheduled by a single DCI, so that a single HARQ-ACK is returned to the multiple PDSCHs.

### (Option 1-2-2)

Only one C-DAI and one T-DAI (if present) may be included in the DCI scheduling PDSCH. In this case, C-DAI and T-DAI (if present) may be counted based on the number of scheduled PDSCHs.

Fig. 14 is a diagram illustrating an example of Option 1-2-2. On the left side of Fig. 14, three consecutive PDSCHs are scheduled in the first slot of CC0. In the first slot of CC1, a single PDSCH is scheduled. In DCI#0 on CC0, the C-DAI is set to 1 corresponding to the first PDSCH. The T-DAI reflects the total number of PDSCHs scheduled at the timing of the DCI and is therefore 4. In DCI#1 on CC1, the C-DAI is 4 because it reflects three PDSCHs scheduled on CC0 and one PDSCH scheduled on CC1. In this example, T-DAI does not exist in DCI#1 on CC1.

At the second slot from the first in Fig. 14, on CC2, three consecutive PDSCH are scheduled. n DCI#2 on CC2, the C-DAI is 5 corresponding to the first PDSCH. The T-DAI reflects the total number of PDSCHs scheduled at the timing of the DCI and is therefore 7.

### (Option 1-2-3)

In the example of Option 1-2-2, a notification of the explicit DAI is transmitted in the DCI only for the first PDSCH on each CC. In contrast, a notification of an explicit DAI may be transmitted in DCI for each PDSCH on each CC, as Option 1-2-3.

Fig. 15 is a diagram illustrating an example of Option 1-2-3. On the left side of Fig. 15, three consecutive PDSCHs are scheduled in the first slot of CC0. In the first slot on CC1, a single PDSCH is scheduled. In the DCI #0 on CC0, the C-DAI becomes 1 corresponding to the first PDSCH, the C-DAI becomes 2 corresponding to the second PDSCH from the first, and the C-DAI becomes 3 corresponding to the third PDSCH from the first. The T-DAI reflects the total number of PDSCHs scheduled at the timing of the DCI and is therefore 4. In DCI#1 on CC1, the C-DAI is 4 because it reflects three PDSCHs scheduled on CC0 and one PDSCH scheduled on CC1. In this example, T-DAI does not exist in DCI#1 on CC1.

At the second slot from the first in Fig. 15, three consecutive PDSCH are scheduled on CC2. In the DCI #2 on CC2, the C-DAI becomes 5 corresponding to the first PDSCH, the C-DAI becomes 6 corresponding to the second PDSCH from the first, and the C-DAI becomes 7 corresponding to the third PDSCH from the first. The T-DAI reflects the total number of PDSCH scheduled at the timing of the DCI and is therefore 7.

In above-described Option 1-2-2 and Option 1-2-3, the DAI included in the DCI reflects the number of scheduled PDSCHs, and, thus, HARQ-ACK bundling need not be applied.

### (e-type 2 HARQ-ACK feedback for joint feedback)

The terminal 20 may feed back multiple HARQ-ACKs for all the multiple PDSCHs scheduled by a single DCI on a single PUCCH by applying the e-type 2 HARQ-ACK feedback. In this case, one PDSCH group index may be assigned to all the scheduled PDSCHs. The number of PDSCH groups may be increased. The NFI may be the same as the Release 16 NFI. C-DAI/T-DAI may be the same as those of the type 2 HARQ-ACK feedback.

### (Option 1-3-1)

One C-DAI and one T-DAI may be included in the DCI for scheduling PDSCH. In this case, C-DAI and T-DAI may be counted based on PDCCH. The HARQ-ACK codebook for each group may be configured in the same manner as that of Option 1-2-1 of the type 2 HARQ-ACK feedback.

Fig. 16 is a diagram illustrating an example of Option 1-3-1. The transmission of the HARQ-ACK may be the same as that of the Release 16 e-type 2 HARQ-ACK feedback.

### (Option 1-3-2)

Only one C-DAI and one T-DAI may be included in the DCI scheduling PDSCH. In this case, C-DAI and T-DAI may be counted based on the number of the scheduled PDSCHs. The HARQ-ACK codebook for each group may be configured similar to that of Option 1-2-2 of the type 2 HARQ-ACK Feedback.

### (Option 1-3-3)

In Option 1-3-2, a notification of the explicit DAI is transmitted in the DCI only for the first PDSCH on each CC. In contrast, a notification of the explicit DAI may be transmitted for each PDSCH on each CC, as Option 1-3-3. The HARQ-ACK codebook for each group may be configured in the same manner as Option 1-2-3 of the type 2 HARQ-ACK feedback.

### (Proposal 2: Individual HARQ-ACK feedback)

The terminal 20 may feed back multiple HARQ-ACKs to all the multiple PDSCHs scheduled by a single DCI by using corresponding separate PUCCHs. Accordingly, the base station 10 may assign multiple PUCCHs by using a single DCI. Accordingly, the notification method of K1 may be extended.

Fig. 17 is a diagram illustrating an example of the terminal 20 feeding back multiple HARQ-ACKs for all the multiple PDSCHs scheduled by a single DCI by using corresponding separate PUCCHs. As illustrated in Fig. 17, HARQ-ACK for PDSCH#0, HARQ-ACK for PDSCH#1, and HARQ-ACK for PDSCH#3 are transmitted with corresponding different resources, respectively.

For the PDSCH-to-HARQ feedback timing indicator field, the following Alt1 and Alt2 can be considered.

(Alt1) The scheduling DCI may indicate one K1 value for the multiple scheduled PDSCHs.

Fig. 18 is a diagram illustrating an example in which the scheduling DCI indicates one common K1 value for multiple PDSCHs.

(Alt2) The scheduling DCI may indicate, for each PDSCH from among multiple scheduled PDSCHs, the corresponding K1 value (a different K1 value may be indicated per PDSCH).

Fig. 19 is a diagram illustrating an example in which the scheduling DCI indicates a different K1 value per PDSCH.

For the PUCCH resource indicator field, the following Alt1 and Alt2 can be considered.

(Alt1) The scheduling DCI may indicate one PRI value that is commonly applied to each of the multiple PDSCHs. The PUCCH resource may be determined by the PRI of the last DCI associated with the PUCCH for transmitting the HARQ-ACK.

(Alt2) The scheduling DCI may indicate, for each PDSCH from among the multiple PDSCHs, a corresponding PRI value (a different PRI value may be indicated per PDSCH). The PUCCH resource may be determined by the PRI of the last DCI associated with the PUCCH for transmitting the HARQ-ACK.

The following Alt1 and Alt2 can be considered for the PUCCH power control field.

(Alt1) The scheduling DCI may indicate one TPC command value for the PUCCH for transmitting the HARQ-ACK for all the scheduled PDSCHs.

(Alt2) The scheduling DCI may indicate one TPC command value for the PUCCH for transmitting the HARQ-ACK for each PDSCH from among the multiple PDSCHs (a different TPC command value may be indicated per PUCCH for transmitting ARQ-ACK).

### (Type 1 HARQ-ACK feedback for individual HARQ-ACK feedback)

The type 1 HARQ-ACK feedback for individual HARQ-ACK feedbacks may be the same as the normal type 1 HARQ-ACK feedback.

### (Type 2 HARQ-ACK feedback for individual HARQ-ACK feedback)

The type 2 HARQ-ACK feedback may be applied for individual HARQ-ACK feedback.

### (Option2-1)

The terminal 20 may feed back multiple HARQ-ACKs for all the multiple PDSCHs scheduled by a single DCI in separate PUCCHs by applying the type 2 HARQ-ACK feedback. In this case, the DCI may include one C-DAI and one T-DAI (if present) and may be counted based on PDCCH.

C-DAI and T-DAI counts may be associated with the first scheduled PDSCH or the last scheduled PDSCH.

Fig. 20 is a diagram illustrating an example of Option 2-1.

Fig. 21 is a diagram illustrating an example of the order of the HARQ-ACK bits in the type 2 HARQ-ACK codebook.

Fig. 22 is a diagram illustrating details of an example of Option 2-1.

Fig. 23 is a diagram illustrating an example of a configuration of the Type 2 HARQ-ACK codebook.

### (Option2-2)

The terminal 20 may feed back multiple HARQ-ACKs for all the multiple PDSCHs scheduled by a single DCI in separate PUCCHs by applying the type 2 HARQ-ACK feedback. In this case, for each PDSCH scheduled, C-DAI and T-DAI (if present) may be included in the scheduling DCI. The C-DAI may indicate the accumulated number of scheduled PDSCHs associated with the HARQ-ACK codebook up to the current PDSCH. The T-DAI may indicate the total number of PDSCHs associated with the HARQ-ACK codebook up to the current PDCCH monitoring occasion.

As a method of configuring the type 2 HARQ-ACK codebook in Option 2-2, the method of ordering the HARQ-ACK bits in Release 16 based on C-DAI/T-DAI may be reused.

Fig. 24 is a diagram illustrating an example of Option 2-2. It is assumed that, as the value of K1, a different value is set per PDSCH.

Fig. 25 is a diagram illustrating details of an example of Option 2-2. It is assumed that, as the value of K1, a different value is set per PDSCH.

Fig. 26 is a diagram illustrating an example of a method of configuring a type 2 HARQ-ACK codebook in Option 2-2. It is assumed that, as the value of K1, a different value is set per PDSCH.

### (Option 2-3)

The terminal 20 may feed back multiple HARQ-ACKs for the multiple PDSCHs scheduled by a single DCI in separate PUCCHs by applying the e-type 2 HARQ-ACK feedback.

### (Option 2-3-1)

In the case of Option 2-3, a single PDSCH group index may be assigned to all the scheduled PDSCHs. The HARQ-ACK for all the PDSCH scheduled by the single DCI may be fed back in one group. The NFI may be the same as the Release 16 NFI. One bit may be set per scheduled group by a higher layer parameter, multiple bits may be set for each group, or 0 bits may be set. C-DAI/T-DAI may be the same as those of the type 2 HARQ-ACK feedback. The configuration of the HARQ-ACK codebook may be the same as that of any of Option 1-3-1 to Option 1-3-3.

### (Option 2-3-2)

In the case of Option 2-3, a separate group index may be assigned per scheduled PDSCH. HARQ-ACK for all the PDSCHs scheduled by the single DCI may be fed back in the same group or in different groups. If an NFI field is present, the NFI field may be a 1 bit field for each PDSCH group.

### (Option 2-3-2-1)

In the case of Option 2-3, the DCI may include the C-DAI/T-DAI for each group.

### (Alt1)

The C-DAI may indicate the cumulative number combinations of {CC, PDCCH monitoring occasion} up to the current combination of {CC, PDCCH monitoring occasion}. T-DAI may indicate the total number of {CC, PDCCH monitoring occasion} up to and including current PDCCH monitoring occasion. In this case, the terminal 20 may configure a HARQ-ACK codebook for each group, for example, based on the method illustrated in Fig. 13.

### (Alt2)

C-DAI and T-DAI may be counted based on the number of the scheduled PDSCHs. In this case, the terminal 20 may configure a HARQ-ACK codebook for each group, for example, based on the method illustrated in Fig. 14.

### (Options 2-3-2-2)

In the case of Option 2-3, the DCI may include C-DAI/T-DAI per scheduled PDSCH. The C-DAI may indicate the cumulative number of the combinations of {CC, PDCCH monitoring occasion} up to the current combination of {CC, PDCCH monitoring occasion}. T-DAI may indicate the total number of {CC, PDCCH monitoring occasion} up to the current PDCCH monitoring occasion. T-DAI may be set for each PDSCH. Alternatively, T-DAI may be set for each group. In this case, the terminal 20 may configure a HARQ-ACK codebook for each group, for example, based on the method illustrated in Fig. 15.

### (Proposal 3: Partial joint HARQ-ACK feedback)

In above-described Proposal 1, the PUCCH for transmitting the HARQ-ACKs are bundled into one. Furthermore, in above-described Proposal 2, a PUCCH resource is assigned for each HARQ-ACK from among the multiple HARQ-ACKs. Proposal 1 and Proposal 2 may be combined as Proposal 3.

Fig. 27 is a diagram illustrating an example of Proposal 3. As illustrated in Fig. 27, a PUCCH may be configured for transmitting HARQ-ACK for PDSCH #0 and PDSCH #1, and another PUCCH may be configured for transmitting HARQ-ACK for PDSCH #2 and PDSCH #3.

For the PDSCH-to-HARQ feedback timing indicator field, the following Alt1 and Alt2 can be considered.

(Alt1) The scheduling DCI may indicate one K1 value, which is common among sets of PDSCHs.

(Alt2) The scheduling DCI may indicate, for each set of PDSCHs, a corresponding K1 value (a different K1 value may be indicated per set of PDSCHs).

For the PUCCH resource indicator field, the following Alt1 and Alt2 can be considered.

(Alt1) The scheduling DCI may indicate one PRI value that is commonly applied among sets of PDSCHs. The PUCCH resource may be determined by the PRI of the last DCI associated with the PUCCH for transmitting the HARQ-ACK.

(Alt2) The scheduling DCI may indicate, for each set of PDSCHs, a corresponding PRI value (a PRI value may be indicated per PDSCH set). The PUCCH resource may be determined by the PRI of the last DCI associated with the PUCCH for transmitting the HARQ-ACK.

The following Alt1 and Alt2 can be considered for the PUCCH power control field.

(Alt1) The scheduling DCI may indicate one common TP command value for the PUCCH for transmitting the HARQ-ACK for each set of the PDSCHs.

(Alt2) The scheduling DCI may indicate one TPC command value for each PUCCH for transmitting the HARQ-ACK for the set of PDSCHs (a different TPC command value may be indicated for each PUCCH for transmitting the HARQ-ACK for the set of the PDSCHs).

In the case of Proposal 3, for each set of the PDSCHs, a HARQ-ACK codebook may be configured in the method illustrated in the example of Fig. 10 when applying the type 1 HARQ-ACK feedback.

In the case of Proposal 3, the following options can be considered when applying the type 2 HARQ-ACK feedback.

### (Option 3-1-1)

Only one C-DAI and one T-DAI (if present) may be included in the DCI for scheduling the PDSCH. In this case, C-DAI and T-DAI (if present) may be counted based on the DCI. The C-DAI may indicate the cumulative number of combinations of {CC, PDCCH monitoring occasion} up to the current combination of {CC, PDCCH monitoring occasion}. T-DAI may indicate the total number of {CC, PDCCH monitoring occasion} up to the current PDCCH monitoring occasion.

The HARQ-ACK for one set of the PDSCHs may include one bundled HARQ-ACK bit. Alternatively, the HARQ-ACK for one set of the PDSCHs may include multiple HARQ-ACK bits that are not bundled. The order of HARQ-ACK bits may be defined in a manner as illustrated in Fig. 24.

### (Option 3-1-2)

For each set of the PDSCHs, C-DAI/T-DAI may be configured. In this case, the HARQ-ACK feedback method may be applied such that, in the method of Option 2-3-2-1, the group is replaced with the set.

### (Option 3-2-3)

For each PDSCH, C-DAI may be configured.

In the case of Proposal 3, the following options can be considered when applying the e-type2 HARQ-ACK feedback.

### (Option 3-2-1)

A single PDSCH group index may be applied to all the scheduled PDSCHs. In this case, the C-DAI/T-DAI may be the same as those of Option 1-3-1.

### (Option 3-2-2)

A group index may be assigned for each set of the PDSCHs.

### (Option 3-2-2-1)

C-DAI/T-DAI may be configured for each PDSCH group when a group index is assigned for each PDSCH set.

### (Option 3-2-2-2)

C-DAI may be configured per PDSCH when the group index is assigned per PDSCH set.

### (Option 3-2-2-3)

C-DAI/T-DAI may be configured per PDSCH set when a group index is assigned for each PDSCH set.

A proposal/option to be applied from among the above-described Proposals/Options may be configured by a higher layer parameter, may be reported by the terminal 20 as the terminal capability (UE Capability), may be specified by a technical specification, or may be configured by a higher layer parameter and reported by the terminal 20 as the terminal capability (UE Capability).

As the terminal capability (UE Capability), information indicating whether the terminal 20 supports scheduling of multiple PDSCHs based on a single DCI may be specified. Furthermore, as the terminal capability (UE Capability), information indicating whether the terminal 20 supports the joint HARQ-ACK feedback for multiple PDSCHs scheduled by a single DCI (the function to report bundled multiple HARQ-ACKs for the multiple PDSCHs) may be specified. Furthermore, as the terminal capability (UE Capability), information indicating whether the function for individual HARQ-ACK feedback for multiple PDSCHs scheduled by a single DCI may be specified. Furthermore, as the terminal capability (UE Capability), information indicating whether the terminal 20 supports the partial joint HARQ-ACK feedback for multiple PDSCHs scheduled by a single DCI (the function to report partially bundled multiple HARQ-ACKs for the multiple PDSCHs) may be specified.

### (Device configuration)

Next, an example of a functional configuration of the base station 10 and the terminal 20 for performing the processes and operations described above is described. The base station 10 and the terminal 20 include the functions for executing the above-described Proposals 1-3. However, each of the base station 10 and the terminal 20 may only include the proposed function of any one of Proposals 1-3.

### <Base station 10>

Fig. 28 is a diagram illustrating an example of a functional configuration of the base station 10. As illustrated in Fig. 28, the base station 10 is provided with a transmitting unit 110; a receiving unit 120; a configuration unit 130; and a control unit 140. The functional configuration illustrated in Fig. 28 is merely an example. Functional division and names of functional units may be any division and names, provided that operation according to the embodiments of the present invention can be executed. The transmitting unit 110 and the receiving unit 120 may be referred to as a communication unit.

The transmitting unit 110 includes a function for generating a signal to be transmitted to the terminal 20 and transmitting the signal through radio. The receiving unit 120 includes a function for receiving various signals transmitted from the terminal 20 and retrieving, for example, information of a higher layer from the received signals. The transmitting unit 110 is provided with a function to transmit NR-PSS, NR-SSS, NR-PBCH, DL/UL control signals, DL data, and the like, to the terminal 20. Furthermore, the transmitting unit 110 transmits the configuration information or the like described in Proposal 1-2.

The configuration unit 130 stores, in a storage device, preconfigured configuration information and various types of configuration information to be transmitted to the terminal 20, and reads out the information from the storage device, if necessary. The control unit 140 performs resource assignment, control of the entire base station 10, and the like. The functional unit related to signal transmission in the control unit 140 may be included in the transmitting unit 110, and the functional unit related to signal reception in the control unit 140 may be included in the receiving unit 120. Furthermore, the transmitting unit 110 may be referred to as a transmitter, and the receiving unit 120 may be referred to as a receiver.

### <Terminal 20>

FIG. 29 is a diagram illustrating an example of a functional configuration of the terminal 20. As illustrated in FIG. 29, the terminal 20 includes a transmitting unit 210; a receiving unit 220; a configuration unit 230; and a control unit 240. The functional configuration illustrated in FIG. 29 is merely an example. The functional division and the names of the functional units may be any division and names, provided that the operation according to the embodiments of the present invention can be executed. The transmitting unit 210 and the receiving unit 220 may be referred to as a communication unit.

The transmitting unit 210 creates a transmission signal from transmission data and transmits the transmission signal through radio. The receiving unit 220 receives various signals through radio and retrieves higher layer signals from the received physical layer signals.

The configuration unit 230 stores, in a storage device, various types of configuration information received by the receiving unit 220 from the base station 10, and reads out the information from the storage device, if necessary. Furthermore, the configuration unit 230 stores preconfigured configuration information. The control unit 240 performs control or the like of the entire terminal 20. A functional unit related to signal transmission in the control unit 240 may be included in the transmitting unit 210, and a functional unit related to signal reception in the control unit 240 may be included in the receiving unit 220. Furthermore, the transmitting unit 210 may be referred to as a transmitter, and the receiving unit 220 may be referred to as a receiver.

In the embodiments, at least, the terminal, the communication method, and the base station below are described.

### (Item 1)

A terminal comprising:
a receiving unit that receives a single item of downlink control information including scheduling information for multiple downlink shared channels and an offset value between a resource position of one downlink shared channel of the multiple downlink shared channels and a resource position of an uplink control channel, and that receives the multiple downlink shared channels in accordance with the scheduling information;
a control unit that determines a resource position of the uplink control channel for transmitting feedback information for the reception of the multiple downlink shared channels based on the resource position of the one downlink shared channel and the offset value; and
a transmitting unit that transmits the feedback information for the reception of the multiple downlink shared channels at the determined resource position of the uplink control channel.

### (Item 2)

The terminal as described in item 1, wherein the resource position of the one downlink shared channel is located at an end in a time direction from among multiple resource positions of the multiple downlink shared channels.

### (Item 3)

The terminal as described in item 2, wherein the feedback information for the reception of the multiple downlink shared channels includes a bit indicating feedback information of each downlink shared channel of the multiple downlink shared channels.

### (Item 4)

The terminal as described in item 2, wherein the feedback information for the reception of the multiple downlink shared channels includes a single bit obtained by bundling the feedback information of the multiple downlink shared channels.

### (Item 5)

A communication method executed by a terminal, the method comprising:
receiving a single item of downlink control information including scheduling information for multiple downlink shared channels and an offset value between a resource position of one downlink shared channel of the multiple downlink shared channels and a resource position of an uplink control channel, and receiving the multiple downlink shared channels in accordance with the scheduling information;
determining a resource position of the uplink control channel for transmitting feedback information for the reception of the multiple downlink shared channels based on the resource position of the one downlink shared channel and the offset value; and
transmitting the feedback information for the reception of the multiple downlink shared channels at the determined resource position of the uplink control channel.

### (Item 6)

A base station comprising:
a transmitting unit that transmits a single item of downlink control information including scheduling information for multiple downlink shared channels and an offset value between a resource position of one downlink shared channel of the multiple downlink shared channels and a resource position of an uplink control channel, and that transmits the multiple downlink shared channels in accordance with the scheduling information;
a control unit that determines a resource position of the uplink control channel for receiving feedback information for the reception of the multiple downlink shared channels by a terminal based on the resource position of the one downlink shared channel and the offset value; and
a receiving unit that receives the feedback information for the reception of the multiple downlink shared channels at the determined resource position of the uplink control channel.

According to a configuration described any one of the above-described items, there is provided an extended HARQ technique in a case where multiple PDSCHs are scheduled by a single DCI.

### (Hardware configuration)

The block diagrams (FIG. 28 and FIG. 29) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

For example, the base station 10, the terminal 20, or the like in an embodiment of the present disclosure may function as a computer for performing a process of the radio communication method according to the present disclosure. Fig. 30 is a diagram illustrating an example of a hardware configuration of the base station 10 and the terminal 20 according to an embodiment of the present disclosure. Each of the base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, or the like. The hardware configuration of each of the base station 10 and the terminal 20 may be configured to include each device depicted, or may be configured without including some devices.

Each function in each of the base station 10 and the terminal 20 is implemented such that predetermined software (program) is read on hardware, such as the processor 1001, the storage device 1002, and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a Central Processing Unit (CPU) including an interface with a peripheral device, a control device, an operation device, a register, and the like. For example, the above-described control unit 140, the control unit 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the control unit 140 of the base station 10 illustrated in FIG. 28 may be implemented by a control program which is stored in the storage device 1002 and operates on the processor 1001. Furthermore, for example, the control unit 240 of the terminal 20 illustrated in Fig. 29 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and may be configured with, for example, at least one of a Read Only Memory (ROM), an Erasable Programmable ROM (EPROM), an Electrically Erasable Programmable ROM (EEPROM), a Random Access Memory (RAM), and the like. The storage device 1002 may also be referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computerreadable recording medium and may be configured with, for example, at least one of an optical disk such as a Compact Disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The above-described auxiliary storage device 1003 may be referred to as a secondary storage. The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as, for example, a "network device," a "network controller," a "network card," a "communication module," or the like. The communication device 1004 may be configured to include a high frequency switch, a duplexer, a filter, a frequency synthesizer, and the like to implement at least one of frequency division duplex (FDD: Frequency Division Duplex) and time division duplex (TDD: Time Division Duplex). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally formed (such as a touch panel).

The devices, such as the processor 1001 and the storage device 1002, are connected by the bus 1007 for communicating information. The bus 1007 may be configured with a single bus or may be configured with different buses between the devices.

Furthermore, each of the base station 10 and the terminal 20 may be configured to include hardware, such as a microprocessor, a digital signal processor (DSP: Digital Signal Processor), an Application Specific Integrated Circuit (ASIC), a Programmable Logic Device (PLD), or a Field Programmable Gate Array (FPGA), or all or some of the functional blocks may be implemented by the hardware. For example, the processor 1001 may be implemented by at least one of these hardware components.

### (Supplemental embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the base station 10 and the terminal 20 are described using the functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by using any other method. For example, the notification of information may be provided by physical layer signalling (for example, Downlink Control Information (DCI) or Uplink Control Information (UCI)), higher layer signaling (for example, Radio Resource Control (RRC) signaling, Medium Access Control (MAC) signaling, broadcast information (Master Information Block (MIB), System Information Block (SIB)), other signals, or a combination thereof. Furthermore, the RRC signaling may be referred to as an RRC message and may be, for example, an RRC Connection Setup message, an RRC Connection Reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), new Radio (NR), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The order of the processing procedures, the order of the sequences, the order of the flowcharts, and the like of the respective aspects/embodiments described in this specification may be changed, provided that there is no contradiction. For example, the method described in the present disclosure presents elements of various steps with an exemplary order and is not limited to a presented specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case is exemplified above in which there is one network node other than the base station 10. The one network node may be a combination of a plurality of other network nodes (e.g., MME and S-GW).

Information, a signal, or the like described in the present disclosure may be output from a higher layer (or a lower layer) to a lower layer (or a higher layer). Information, a signal, or the like described in the present disclosure may be input and output via a plurality of network nodes.

Input and output information and the like may be stored in a specific place (for example, a memory) or may be managed by using a management table. Input and output information and the like may be overwritten, updated, or additionally written. Output information and the like may be deleted. Input information and the like may be transmitted to another device.

The determination in the present disclosure may be made in accordance with a value (0 or 1) indicated by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL: Digital Subscriber Line)) and a radio technology (such as infrared rays or a microwave), at least one of the wired technology and the radio technology is included in a definition of a transmission medium.

Information, signals, and the like described in the present disclosure may be expressed using any one of a variety of different techniques. For example, data, instructions, commands, information, signals, bits, symbols, chips, and the like which are mentioned throughout the above description may be expressed by voltages, currents, electromagnetic waves, magnetic fields or magnetic particles, optical fields or photons, or any combination thereof.

The terms described in the present disclosure and terms necessary for understanding the present disclosure may be replaced with terms having the same or similar meanings. For example, at least one of a channel and a symbol may be a signal (signalling). Furthermore, a signal may be a message. Furthermore, a component carrier (CC: Component Carrier) may be referred to as a "carrier frequency," a "cell," a "frequency carrier," or the like.

The terms "system" and "network" used in the present disclosure are used interchangeably.

Furthermore, information, parameters, and the like described in the present disclosure may be expressed by using absolute values, may be expressed by using relative values from predetermined values, or may be expressed by using any other corresponding information. For example, radio resources may be those indicated by an index.

The names used for the above-described parameters are not limited names in any point of view. Furthermore, mathematical formulas or the like using the parameters may be different from those explicitly disclosed in the present disclosure. Since various channels (for example, a PUSCH, a PUCCH, a PDCCH, and the like) and information elements can be identified by any suitable names, various names assigned to the various channels and the information elements are not limited names in any point of view.

In the present disclosure, the terms "base station (BS: Base Station)," "radio base station," "base station," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base station may also be referred to by a term, such as a macrocell, a small cell, a femtocell, and a picocell.

The base station can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS: Mobile Station)," "terminal (user terminal)," "terminal (UE: User Equipment)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or some other suitable terms.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device that need not move during a communication operation. For example, at least one of the base station and the mobile station may be an Internet of Things (IoT) device such as a sensor.

Furthermore, the base station in the present disclosure may be replaced with a terminal. For example, each aspect/embodiment of the present disclosure may be applied to a configuration in which communication between the base station and the terminal is replaced with communication between a plurality of terminals 20 (for example, which may be referred to as Device-to-Device (D2D) or Vehicle-to-Everything (V2X)). In this case, the terminal 20 may have the functions of the base station 10 described above. Furthermore, the terms "uplink" and "downlink" may be replaced with terms (for example, "side") corresponding to inter-terminal communication. For example, an uplink channel, a downlink channel, or the like may be replaced with side channels.

Similarly, the terminal in the present disclosure may be replaced with the base station. In this case, the base station may have the functions of the above-described terminal.

The terms "determination(determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case of using in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as nonlimiting and non-exhaustive examples.

A reference signal may be abbreviated as RS (Reference Signal) and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation, such as "first" or "second," used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Furthermore, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Furthermore, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS: SubCarrier Spacing), a bandwidth, a symbol length, a cyclic prefix length, a transmission time interval (TTI: Transmission Time Interval), a number of symbols per TTI, a radio frame configuration, a specific filtering process performed in the frequency domain by a transceiver, a specific windowing process performed in the time domain by a transceiver, and the like.

The slot may include one or more symbols (Orthogonal Frequency Division Multiplexing (OFDM) symbols, Single Carrier Frequency Division Multiple Access (SC-FDMA) symbols, or the like) in the time domain. The slot may be a time unit based on the numerology.

The slot may include a plurality of mini slots. Each mini slot may include one or more symbols in the time domain. Furthermore, the mini slot may be referred to as a sub-slot. The mini slot may include fewer symbols than a slot. A PDSCH (or PUSCH) transmitted in a unit of time greater than a mini slot may be referred to as a PDSCH (or PUSCH) mapping type A. A PDSCH (or PUSCH) transmitted using a mini slot may be referred to as a PDSCH (or PUSCH) mapping type B.

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each terminal 20) to each terminal 20 in units of TTIs. The definition of the TTI is not limited thereto.

The TTI may be a transmission time unit such as a channel coded data packet (transport block), a code block, or a code word, or may be a processing unit such as scheduling or link adaptation. Furthermore, when a TTI is provided, a time interval (for example, the number of symbols) in which a transport block, a code block, a code word, or the like is actually mapped may be shorter than the TTI.

When one slot or one mini slot is referred to as a TTI, one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Furthermore, a long TTI (for example, a normal TTI, a subframe, or the like) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Furthermore, a time domain of an RB may include one or more symbols and may be a length of one slot, one mini slot, one subframe, or one TTI. One TTI, one subframe, or the like may be formed of one or more resource blocks.

Furthermore, one or more RBs may be referred to as a physical resource block (PRB: Physical RB), a sub carrier group (SCG: Sub-Carrier Group), a resource element group (REG: Resource Element Group), a PRB pair, an RB pair, or the like.

Furthermore, the resource block may be formed of one or more resource elements (RE: Resource Element). For example, one RE may be a radio resource region of one subcarrier and one symbol.

A bandwidth part (BWP: Bandwidth Part) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Furthermore, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from C." Terms such as "separated," "coupled," or the like may also be interpreted similarly to "different."

Each aspect/embodiment described in the present disclosure may be used alone, in combination, or may be switched in accordance with the execution. Furthermore, notification of predetermined information (for example, notification of "being X") is not limited to notification performed explicitly, but may be performed implicitly (for example, not notifying the predetermined information).

In the present disclosure, an SS block or a CSI-RS is an example of a synchronization signal or a reference signal.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### [Reference Signs List]

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 1001: processor
- 1002: storage device
- 1003: auxiliary storage device
- 1004: communication device
- 1005: input device
- 1006: output device

## Claims

1. A terminal comprising:
a receiving unit that receives a single item of downlink control information including scheduling information for multiple downlink shared channels and an offset value between a resource position of one downlink shared channel of the multiple downlink shared channels and a resource position of an uplink control channel, and that receives the multiple downlink shared channels in accordance with the scheduling information;
a control unit that determines a resource position of the uplink control channel for transmitting feedback information for the reception of the multiple downlink shared channels based on the resource position of the one downlink shared channel and the offset value; and
a transmitting unit that transmits the feedback information for the reception of the multiple downlink shared channels at the determined resource position of the uplink control channel.

2. The terminal according to claim 1, wherein the resource position of the one downlink shared channel is located at an end in a time direction from among multiple resource positions of the multiple downlink shared channels.

3. The terminal according to claim 2, wherein the feedback information for the reception of the multiple downlink shared channels includes a bit indicating feedback information of each downlink shared channel of the multiple downlink shared channels.

4. The terminal according to claim 2, wherein the feedback information for the reception of the multiple downlink shared channels includes a single bit obtained by bundling the feedback information of the multiple downlink shared channels.

5. A communication method executed by a terminal, the method comprising:
receiving a single item of downlink control information including scheduling information for multiple downlink shared channels and an offset value between a resource position of one downlink shared channel of the multiple downlink shared channels and a resource position of an uplink control channel, and receiving the multiple downlink shared channels in accordance with the scheduling information;
determining a resource position of the uplink control channel for transmitting feedback information for the reception of the multiple downlink shared channels based on the resource position of the one downlink shared channel and the offset value; and
transmitting the feedback information for the reception of the multiple downlink shared channels at the determined resource position of the uplink control channel.

6. A base station comprising:
a transmitting unit that transmits a single item of downlink control information including scheduling information for multiple downlink shared channels and an offset value between a resource position of one downlink shared channel of the multiple downlink shared channels and a resource position of an uplink control channel, and that transmits the multiple downlink shared channels in accordance with the scheduling information;
a control unit that determines a resource position of the uplink control channel for receiving feedback information for the reception of the multiple downlink shared channels by a terminal based on the resource position of the one downlink shared channel and the offset value; and
a receiving unit that receives the feedback information for the reception of the multiple downlink shared channels at the determined resource position of the uplink control channel.
